# EUROPÄISCHE PATENTSCHRIFT

(11) **EP 2 803 943 B1**
(45) Veröffentlichungstag und Bekanntmachung des Hinweises auf die Patenterteilung: **07.02.2018**
(21) Anmeldenummer: 14001583.5
(22) Anmeldetag: 06.05.2014
(51) Int. Cl.: G01B 5/012, G01B 21/04, H04L 12/54

(54) **Verfahren zur Übertragung von Messsignalen in einem Bearbeitungszentrum mit zwei oder mehr Spindeln; Messtaster und Empfänger für das Verfahren**
Method for transmitting measurement signals in a machining centre with two or more spindles; measuring probe and receiver for the method
Procédé de transmission de signaux de mesure dans un centre de traitement doté d'au moins deux broches; palpeur de mesure et récepteur pour le procédé

(30) Priorität: 13.05.2013 DE 102013008182
(43) Veröffentlichungstag der Anmeldung: 19.11.2014
(73) Patentinhaber: Blum-Novotest GmbH, 88287 Grünkraut-Gullen (DE)
(72) Erfinder: Rittler, Wolfgang, 88099 Neukirch (DE); Frick, Thomas, 88287 Grünkraut (DE); Häfele, Stefan, 88069 Tettnang (DE)
(74) Vertreter: Schmidt, Steffen J.

(56) Entgegenhaltungen:
- DE-B4- 10 262 188
- US-A1- 2005 166 413

## Beschreibung

### Einleitung

Hier wird ein Verfahren zur Übertragung von Messsignalen in Bearbeitungszentren mit zwei oder mehr Spindeln beschrieben. Außerdem werden die entsprechenden Vorrichtungskomponenten wie die Messtaster und ein entsprechender Empfänger erläutert. Details hierzu sind in den Ansprüchen definiert; aber auch die Beschreibung enthält relevante Angaben zur Struktur und zur Funktionsweise sowie zu Varianten des Verfahrens und den Vorrichtungskomponenten.

### Hintergrund

In Bearbeitungszentren mit zwei Spindeln wird mit jeder Spindel ein Werkstück bearbeitet. Ein Bearbeitungszentrum ist eine Werkzeugmaschine, die für einen automatisierten Betrieb mit einer CNC-Steuerung zur Komplettbearbeitung von (Metall-, Holz-, oder Kunststoff-) Werkstücken ausgerüstet ist. An jeder der beiden Spindeln kann ein Werkzeug oder ein Werkstück montiert sein; die Spindeln können fest positioniert oder zum Beispiel in drei orthogonalen Richtungen X, Y, Z innerhalb eines Arbeitsraums des Bearbeitungszentrums bewegt und angetrieben werden. In einem Bearbeitungszentrum mit zwei Spindeln können zum Beispiel zwei Werkstücke gleichzeitig bearbeitet werden. Bearbeitungszentren haben in der Regel einen automatischen Werkzeug- und Werkstückwechsler, der - von der CNC-Steuerung veranlasst - einen Messtaster in die jeweilige Spindel ein- und auswechseln kann, um das mit dieser Spindel bearbeitete Werkstück auch zu vermessen.

Das Werkzeug kann durch die Werkzeugmaschine in einen Messraum, einen zur Messung festgelegten Bereich, eines berührend oder berührungslos arbeitenden Tasters bewegt werden. Der berührungslos funktionierende Taster detektiert die Nähe einer Oberfläche beispielsweise mit einer kapazitiven, induktiven oder optischen Einrichtung. Der berührend funktionierende Taster detektiert eine Oberfläche bei Kontakt mit dieser. Für jedes detektierte Merkmal geben Kontakt- und kontaktlose Taster entsprechende Messdaten an eine numerische Maschinen-Steuerung weiter, die ein Computerprogramm enthalten kann. Zusammen mit Maschinenpositionsinformationen aus der Steuerung ermöglichen die Tastermessdaten, dass die numerische Steuerung, zum Beispiel eine CNC-Steuerung, ein exaktes Bild der Abmessungen des Werkzeugs oder Werkstücks ermitteln kann.

### Stand der Technik

Die DE 102 62 188 A1 betrifft einen multidirektionalen Messtaster mit einem Gehäuse, in dem ein ringförmiges Stützlager ausgebildet ist, das eine X, Y -Lagerebene und eine dazu normale zentrale Achse Z des Messtasters definiert. An einem Tragkörper ist eine Taststiftaufnahme zentral angeordnet um einen Taststift aufzunehmen. Ein Übertragungsglied ist im Gehäuse entlang der zentralen Achse Z verschiebbar geführt, um beliebige Auslenkungen des Tragkörpers aus seiner Ruhelage in geradlinige Bewegungen umzusetzen. Ein Sensor setzt die Bewegungen des Übertragungsgliedes in Messsignale um.

Die Übertragung der Messsignale von einem Messtaster zu einem stationären Empfangsteil erfolgt drahtlos entweder durch optische Signale oder durch Funksignale.

Üblicherweise sind in einem Bearbeitungszentrum entsprechend der Anzahl der Spindeln auch Messtaster vorgesehen, die in die jeweilige Spindel zur Werkstückvermessung eingesetzt werden können.

Für Bearbeitungszentren mit zwei Spindeln existiert nun die Anforderung, dass in einem Messablauf gleichzeitig bearbeitete Werkstücke auch gleichzeitig gemessen werden können.

In der Regel kommen die Messtaster in einem Bearbeitungszentrum vom selben Hersteller und funktionieren identisch. Wenn nun die beiden Messtaster synchron denselben Übertragungskanal nutzen, kommt es durch den gleichzeitigen Betrieb der zwei Messtaster zu unerwünschten Signalkollisionen.

Optische Systeme benutzen für die beiden Messtaster Lichtsignale unterschiedlicher Wellenlänge und Funksysteme benutzen unterschiedliche Trägerfrequenzen. Nachteilig an diesen Systemen ist, dass für jeden Übertragungskanal ein eigener Empfangsteil benötigt wird, was die Kosten für das Gesamtsystem steigert.

Eine Kanaltrennung zwischen den beiden verfügbaren Übertragungskanälen bereitet bei optischen Systemen in der Praxis große Schwierigkeiten, da es zur gegenseitigen Beeinflussung zwischen den beiden Übertragungskanälen kommen kann. Optische Messtaster werden üblicherweise durch einen Lichtblitz aktiviert, der in den Arbeitsraum des Bearbeitungszentrums ausgesendet wird, in dem sich die beiden Messtaster befinden. Damit werden diese beiden Messtaster auch zeitgleich aktiviert. Eine gezielte sukzessive Aktivierung der beiden Messtaster durch gerichtete Lichtblitze ist praktisch nicht möglich. Wenn sich die beiden Lichtblitze überlagern, ist nicht sichergestellt, dass beide Messtaster aktiviert werden.

Selbst wenn optische Systeme gezielt mit einem dem jeweiligen Messtaster zugeordneten Lichtblitz-Signal aktiviert werden können, muss dann mit den beiden Messtastern auch sequenziell gemessen werden. Da die Messprozedur doppelt auszuführen ist, verlängert sich die gesamte Messzeit erheblich.

Da optische Systeme in der Regel mit modulierten Lichtsignalen arbeiten, können die beiden Messtaster auch mit unterschiedlichen Modulationsfrequenzen arbeiten. Nachteilig ist bei dieser Vorgehensweise, dass dabei zwei Empfangsteile benötigt werden. Außerdem ist der Demodulator für die niedrigere Modulationsfrequenz sehr leicht durch die höhere Modulationsfrequenz zu stören.

Für eine hohe Genauigkeit bei der Werkstückvermessung soll ein Antast-Vorgang, also ein Übergang des Messtasters aus seiner nicht ausgelenkten Lage in seine ausgelenkte Lage, möglichst schnell mittels einer Statusbotschaft zum Empfangsteil und von dort zu der Maschinensteuerung übertragen werden. Dabei sollten die Statusbotschaften stets mit möglichst der gleichen Übertragungszeit an die Maschinensteuerung übertragen werden. Von einer Messung zur nächsten unterschiedliche Übertragungszeiten der Statusbotschaften von einem Messtasters zum Empfangsteil führen zur Verfälschung der Messergebnisse. Daher ist es nicht möglich, dass die beiden Messtaster das Aussenden ihrer jeweiligen Statusbotschaften zum Empfangsteil so oft wiederholen, bis die Statusbotschaften von dem Empfangsteil zufällig richtig empfangen werden.

Bekannte Lösungen dieses Problems betreiben die Messtaster auf den beiden, üblicherweise in den Messtastern und dem jeweils zugehörigen Empfänger aktivierbaren, unterschiedlichen Kanälen.

In Maschinen mit großen Arbeitsräumen, in der Fünf-Achs-Bearbeitung, oder wenn ein Messtaster in ein Werkstück eintaucht, kann eine optische Sichtverbindung zwischen Messtaster und Empfänger nicht ständig sichergestellt werden. Um auch in solchen Fällen eine zuverlässige Übertragung der Messsignale zu erhalten, kann ein Funk-Messtaster, z. B. der Messtaster TC60 der Anmelderin eingesetzt werden. Ein solcher Messtaster kann bei der automatischen Ermittlung von Werkstückposition, Werkstücklage und Werkstückabmessungen in Bearbeitungszentren sehr zeiteffizient und sicher die Messsignale übertragen. Dabei wird jedes einzelne Bit des per Funk übertragenen Messsignals über das gesamte Frequenzband gespreizt, und nicht, wie bei Messtastern anderer Hersteller üblich, das Messsignal im Kanalsprungverfahren oder mit fester Kanalzuordnung übertragen. Dadurch ist die Übertragung besonders unempfindlich gegen Störeinflüsse. Allerdings ist auch bei dieser Technik die synchrone Aussendung von Messsignalen nicht vorgesehen.
Weiterer Stand der Technik ist aus der US 2005/0166413 A1 bekannt. Das Dokument offenbart einen CMM-Roboterarm mit einem an dessen Ende angeordneten Messeinsatzsegment, wobei einzelne Komponenten des CMM-Roboterarms, wie z.B. Temperaturmesseinrichtungen, Aktuatoren, Dehnmesstreifen, etc., über eine ethernetbasierte Daisy-Chain-Verbindung miteinander verbunden sind. Weiterhin wird ein System offenbart, das mehrere derartige CMM-Roboterarme umfasst, welche über ein Ethernet-Netzwerk miteinander kommunizieren. Alternativ erfolgt die Kommunikation über WiFi (IEEE 802.11b).

Alle bisher verwendeten Ansätze haben in der rauen und schwierig vorhersehbaren Betriebsumgebung eines Bearbeitungszentrums hinsichtlich der Kosten, der Messgenauigkeit, der Zuverlässigkeit, und/oder der Schnelligkeit im Dauerbetrieb nicht überzeugen können.

### Zugrundeliegendes Problem

In Bearbeitungszentren mit zwei oder mehr synchron arbeitenden und/oder mechanisch gekoppelten Spindeln soll eine präzise, kosten- und zeit-effiziente Werkstückvermessung ermöglicht werden.

### Vorgeschlagene Lösung

Dieses Problem wird durch den Gegenstand der unabhängigen Ansprüche 1, 14 und 15 gelöst. Vorteilhafte Weiterbildungen ergeben sich aus den abhängigen Ansprüchen.

Das hier vorgestellte Verfahren dient zur Übertragung von Datentelegrammen wenigstens zweier, jeweils in einer Spindel eines Bearbeitungszentrums aufzunehmender Messtaster. Wie in Anspruch 1 definiert, werden dabei die Datentelegramme durch den jeweiligen Messtaster über einen gemeinsamen Übertragungskanal zum Empfang durch das Empfangsteil ausgesendet. Dabei werden jeweils zwei oder mehr Datentelegramme ausgesendet, von denen jedes eine für den jeweiligen Messtaster charakteristische Information, eine für den jeweiligen Messtaster charakteristische Kennnung, und eine Ordnungszahl des jeweiligen Datentelegramms umfasst, mit dem die charakteristische Information für den jeweiligen Messtaster ausgesendet wird. Zwischen dem Beginn zweier Datentelegramme eines Messtasters mit der gleichen Ordnungszahl verstreicht eine im Wesentlichen konstante Zykluszeit. Zwischen aufeinander folgenden Datentelegrammen eines Messtasters mit unterschiedlicher Ordnungszahl verstreicht jeweils eine im Wesentlichen konstante Pausenzeit. Die Pausenzeit zwischen den Datentelegrammen ist für jeden der jeweiligen Messtaster in Abhängigkeit von einer Anzahl der mit dem Empfangsteil kommunizierenden Messtaster in dem Bearbeitungszentrum, der Zykluszeit jedes der Messtaster zwischen zwei ihrer Datentelegramme mit der gleichen Ordnungszahl und einer Übertragungszeit für ein einzelnes der Datentelegramme unterschiedlich.

### Eigenschaften. Vorteile, Varianten

Das derart organisierte Aussenden der Datentelegramme stellt sicher, dass für jeden der Messtaster zumindest eines seiner Datentelegramme nicht durch ein Datentelegramm anderer Messtaster beeinträchtigt wird. Obwohl nur ein Empfangsteil vorgesehen ist, kann dieses Empfangsteil zumindest jeweils eines der Datentelegramme aller in dem Bearbeitungszentrum mit diesem Empfangsteil über einen einzigen Übertragungskanal kommunizierenden Messtaster zeitlich getrennt von den anderen Datentelegrammen empfangen und auswerten. Für jede Messung eines Messtasters werden zwei oder mehr Datentelegramme mit unterschiedlicher Ordnungszahl versendet.

Da nur ein (stationäres) Empfangsteil benötigt wird, reduziert dies die Kosten für Anschaffung, Installation und Betrieb der Gesamtanordnung. Außerdem entfällt eine aufwendige und fehleranfällige Kanaltrennung für die Übertragungskanäle der einzelnen Messtaster.

Die hier vorgestellte Vorgehensweise ermöglicht den parallelen Betrieb und somit ein (zumindest nahezu) gleichzeitiges Messen mit zwei oder mehr Messtastern, die mit einem einzigen, stationären Empfangsteil über einen einzigen Übertragungskanal kommunizieren.

Zum Initialisieren jedes der Messtaster ist gemäß einer Variante vorgesehen, dass vor dem Aussenden der Datentelegramme ein Aktivierungssignal an die jeweiligen Messtaster gesendet wird. So kann das Aussenden der Datentelegramme durch die jeweiligen Messtaster initiiert werden.

Außerdem kann gemäß einer Variante ein Auswerten der Datentelegramme nach deren Empfang durch das Empfangsteil, und ein Ausgeben eines für das das jeweilige Messsignal charakteristischen Ausgangssignals durch das Empfangsteil an eine numerische Steuerung des Bearbeitungszentrums vorgesehen sein.

Dabei kann gemäß einer Variante jeder der Messtaster mittels eines dedizierten Aktivierungssignals für den jeweiligen der Messtaster aktiviert werden. Gemäß einer anderen Variante kann jeder der Messtaster mittels eines gemeinsamen Aktivierungssignals für alle, einem einzigen Empfangsteil zugeordneten Messtaster aktiviert werden.

Das oder jedes der Aktivierungssignale kann dabei je nach Systemarchitektur und Steuerungskonzept des Bearbeitungszentrums entweder von dem Empfangsteil und/ oder von der numerischen Steuerung des Bearbeitungszentrums an die Messtaster ausgesendet werden.

Die für den jeweiligen Messtaster charakteristische (Status-)Information kann gemäß einer Variante in Abhängigkeit vom Vorliegen einer von zwei Betriebsarten "Normalbetrieb" und "Triggerbetrieb", die Zustände (i) "Messtaster ist in Ruhelage", (ii) "Messtaster ist ausgelenkt", und/oder die Zustände (iii) "Batterie des Messtasters ist gut" (iv) "Batterie des Messtasters ist (nahezu) leer", und/oder "Schaltpunkt 1", "Schaltpunkt 2"... "Schaltpunkt n", umfassen.

Die Messtaster können gemäß einer Variante nach ihrem Aktivieren ihre Datentelegramme in vorbestimmten Zeitintervallen an das Empfangsteil aussenden. Dabei überwacht gemäß einer Variante insbesondere in der Betriebsart "Normalbetrieb" der Messtaster das Empfangsteil, ob eine Kommunikation mit den Messtastern fortwährend besteht, und/oder ob der Zustand "Batterie des Messtasters ist gut" in "Batterie des Messtasters ist leer" für einen der Messtaster gewechselt hat. Sollte dies der Fall sein, kann gemäß einer Variante vorgesehen sein, dass ein hierfür charakteristisches Warnsignal von dem Empfangsteil abgegeben wird.

Für jeden der Messtaster kann gemäß einer Variante vorgesehen sein, dass die Zykluszeit zwischen zwei (aufeinander folgenden) seiner Datentelegramme mit der gleichen Ordnungszahl, also für unterschiedliche Messungen, zumindest annähernd identisch ist.

Des Weiteren kann gemäß einer Variante vorgesehen sein, dass die Übertragungszeit der Datentelegramme für alle Datentelegramme aller Messtaster zumindest annähernd identisch ist.

Sofern zum Beispiel vorgesehen ist, dass (i) genau zwei Messtaster mit einem Empfangsteil über einen einzigen Übertragungskanal kommunizieren, und vorgesehen ist, dass (ii) für jede Messung eines Messtasters genau zwei Datentelegramme an das Empfangsteil gesendet werden, und vorgesehen ist, dass (iii) die Übertragungszeit für ein einzelnes der Datentelegramme von beiden Messtastern gleich lang ist, kann gemäß einer Variante folgendes festgelegt sein:
a) Die Zykluszeiten der beiden Messtaster zwischen zwei ihrer jeweiligen Datentelegramme mit der gleichen Ordnungszahl sind für die beiden Messtaster identisch und betragen mindestens die siebenfache Übertragungszeit eines einzelnen der Datentelegramme.
b) Die zu verstreichende Pausenzeit zwischen den Datentelegrammen einer jeweiligen Messung für jeden der jeweiligen Messtaster ist wie folgt unterschiedlich festgelegt:
   (i) Die zu verstreichende Pausenzeit wird so dimensioniert, dass auch bei gleichzeitigem Sendebeginn der beiden Messtaster immer wenigstens eines ihrer Datentelegramme nicht zeitlich überlappend mit einem der Datentelegramme des jeweils anderen Messtasters ausgesendet wird.
   (ii) Die zu verstreichende Pausenzeit zwischen den Datentelegrammen des einen Messtasters beträgt mindestens die einfache Übertragungszeit eines einzelnen der Datentelegramme.
   (iii)Die zu verstreichende Pausenzeit zwischen den Datentelegrammen des anderen Messtasters beträgt höchstens die doppelte Übertragungszeit eines einzelnen der Datentelegramme.

Es sei verstanden, dass gemäß anderen Variante auch andere Werte für die Zykluszeiten der beiden Messtaster und / oder die Pausenzeiten zwischen den Datentelegrammen des / der jeweils anderen Messtaster festgelegt werden können. Dies gilt insbesondere bei Anwendungen, in denen vorgesehen ist, dass (i) abhängig von der Anzahl der Spindeln im Bearbeitungszentrum mehr als zwei, also zum Beispiel 3, 4, 5 oder 6 Messtaster mit einem einzigen Empfangsteil über einen einzigen Übertragungskanal kommunizieren, und vorgesehen ist, dass (ii) für jede Messung eines Messtasters zwei oder mehr, also zum Beispiel drei, vier, oder fünf Datentelegramme an das Empfangsteil gesendet werden.

In Abhängigkeit vom Vorliegen einer von zwei Betriebsarten "Normalbetrieb" und "Triggerbetrieb" kann sich gemäß einer Variante zum Beispiel auch die Anzahl der Datentelegramme ändern: Im Normalbetrieb werden zum Beispiel zwei Datentelegramme ausgesendet, im Triggerbetrieb werden zum Beispiel drei Datentelegramme ausgesendet.

Die Zykluszeiten aller Messtaster und die Pausenzeit zwischen den Datentelegrammen jedes der Messtaster sind gemäß einer Variante zum Beispiel vorzugsweise so zu bestimmen, dass die Summe der Übertragungszeiten aller ersten Datentelegramme der jeweils anderen Messtaster kleiner oder höchstens gleich der Pausenzeit zwischen den Datentelegrammen des jeweiligen Messtasters ist.

Alternativ oder zusätzlich können gemäß einer Variante auch in beiden Betriebsarten "Normalbetrieb" und "Triggerbetrieb" die Zykluszeiten aller Messtaster unterschiedlich lang gesetzt werden. Durch diese Maßnahmen wird erreicht, dass die Datentelegramme aller Messtaster zeitlich so ineinander geschachtelt werden, dass jedenfalls eines der Datentelegramme jedes der Messtaster von anderen Datentelegrammen der anderen Messtaster nicht beeinträchtigt und so für das Empfangsteil auswertbar ist.

Im Übrigen kann gemäß einer Variante vorgesehen sein, dass in beiden Betriebsarten "Normalbetrieb" und "Triggerbetrieb" zu Beginn des Aussendens jedes der Datentelegramme jeder der Messtaster eine kurze Sicherheitsphase lang nicht sendet. Diese Sicherheitsphase kann gemäß einer Variante zum Beispiel abhängig von der gesamten Übertragungszeit für ein einzelnes der Datentelegramme etwa 1 - 3 % der Übertragungszeit eines Datentelegramms lang sein. Damit wird das Kollisionsrisiko der Datentelegramme weiter reduziert.

Auf Seiten des Empfangsteils und jedes der Messtaster sind gemäß einer Variante die Zykluszeiten und die Pausenzeiten zwischen zwei ihrer jeweiligen Datentelegramme mit der gleichen Ordnungszahl für jeden der Messtaster bekannt. Dazu kann gemäß einer Variante in einer Einlernphase aller Messtaster jeweils die charakteristische Kennung jedes der Messtaster festgelegt werden, jedem der Messtaster können die Zykluszeiten aller Messtaster eingegeben oder ausgewählt werden, und jedem der Messtaster können die Pausenzeiten für aufeinander folgende Datentelegramme aller Messtaster eingegeben oder ausgewählt werden.

Der einfachen Handhabung wegen können gemäß einer Variante im Empfangsteil und / oder den Messtastern für mögliche Varianten (zwei bis zum Beispiel sechs Messtaster, und zwei bis zu Beispiel vier Datentelegramme) Tabellen mit passenden Zykluszeiten und Pausenzeiten werkseitig oder bei der ersten Inbetriebnahme hinterlegt sein. Dann muss nur noch jeweils die charakteristische Kennung jedes der Messtaster auf Seiten des Empfangsteils und jedem der Messtaster festgelegt werden.

Im Normalbetrieb senden alle Messtaster ihre Datentelegramme zum Empfangsteil. Das Empfangsteil überwacht, ob die Kommunikation mit den Messtastern fortlaufend besteht, wertet den Batteriestatus aus und wertet den Schaltzustand des Messtasters (Ausgelenkt / Ruhelage) aus. Durch die vorstehend erläuterte zeitliche Schachtelung der Datentelegramme wird sichergestellt, dass jeweils eines der Datentelegramme eines Messtasters nicht von Datentelegrammen eines - im Fall zweier Messtaster: des - anderen Messtasters gestört wird.

Beim jeweiligen Antasten eines Messtasters an seinem jeweiligen Werkstück tritt ein Trigger-Ereignis auf, das zum Beispiel das Erreichen des "Schaltpunkt 1", des "Schaltpunkt 2"... oder des "Schaltpunkt n", oder "Messtaster ist in Ruhelage", "Messtaster ist ausgelenkt" umfassen kann. Dieses Trigger-Ereignis hat zur Folge, dass der jeweilige Messtaster aus der Betriebsart "Normalbetrieb" in die Betriebsart "Triggerbetrieb" wechselt; außerdem soll das Empfangsteil von diesem Trigger-Ereignis so schnell und sicher wir möglich informiert werden, damit von dem Empfangsteil dieses Trigger-Ereignis mit konstanter und bekannter Verzögerungszeit an die CNC-Steuerung des Bearbeitungszentrums ausgesendet werden kann.

Zum Auswerten der Datentelegramme kann gemäß einer Variante auf Seiten des Empfangsteils anhand der Ordnungszahl des jeweils ungestört empfangenen Datentelegramms, den Zykluszeiten und den Pausenzeiten jedes der Messtaster ermittelt werden, wie viel Zeit seit der Erfassung des Messsignals vergangen ist. Aus dieser Information kann gemäß einer Variante dann in der Betriebsart "Triggerbetrieb" vom Empfangsteil ein Schaltsignal generiert werden, das an die CNC-Steuerung weitergeleitet und dort zusammen mit dem - dort bekannten - Spindelvorschub zur Bestimmung eines Ergebnisses der Werkstückvermessung herangezogen werden kann.

In der Betriebsart "Triggerbetrieb" ist gemäß einer Variante wesentlich, dass für eine hohe Genauigkeit bei der Werkstückvermessung der Übergang des Messtasters aus seiner nicht ausgelenkten Lage in seine ausgelenkte Lage - oder umgekehrt - möglichst schnell als Datentelegramm zum Empfangsteil gelangt, dort ausgewertet wird, und von dort an die Maschinensteuerung übertragen wird. Dazu wird hier gemäß einer Variante vorgeschlagen, jeden Zustands-Übergang des Messtasters mit konstanter Verzögerungszeit vom Empfangsteil an die Maschinensteuerung zu übertragen.

Dazu werden gemäß einer Variante in der Betriebsart "Triggerbetrieb" zu jeder Messung mit einem Zustands-Übergang des Messtasters Datentelegramme zusammengestellt, die eine für den jeweiligen Messtaster charakteristische Information, also den Zustands-Übergang des Messtasters, eine für den jeweiligen Messtaster charakteristische Kennnung, also zum Beispiel welche Nummer / Adresse der Messtaster hat, und eine Ordnungszahl des jeweiligen Datentelegramms, mit dem die charakteristische Information für den jeweiligen Messtaster ausgesendet wird.

In einer Variante sendet jeder Messtaster die Datentelegramme dreifach aus, wobei jeweils die Ordnungszahl des jeweiligen Datentelegramms um eins erhöht wird. Wesentlich ist, dass jedes der Datentelegramme in einem definierten zeitlichen Raster versendet wird, das für jeden Messtaster anders ist. Dieses zeitliche Raster ist für alle Messtaster insgesamt so festgelegt, dass auch bei gegeneinander zeitlich versetztem und innerhalb der Zykluszeiten nicht vorhersehbarem Zeitpunkt des Aussendens der einzelnen Datentelegramme durch andere Messtaster wenigstens eines der drei Datentelegramme jedes Messtasters nicht mit anderen zeitlich kollidiert und deshalb ungestört beim Empfangsteil ankommen kann.

Die zeitliche Abfolge der Datentelegramme jedes einzelnen Messtasters und der Pausen zwischen ihnen, sowie die zeitlichen Abfolgen der Datentelegramme aller Messtaster können gemäß einer Variante derart gestaltet sein, dass in einem definierten Zeitraum, also zum Beispiel einer Zykluszeit, immer mindestens ein Datentelegramm jedes Messtasters von Datentelegrammen anderer Messtaster ungestört an das Empfangsteil übertragen wird.

In einer Variante mit drei Datentelegrammen pro Messung für einen Messtaster wird eine zeitliche Abfolge von 11 Zeitschlitzen vorgesehen. Jeder der 11 Zeitschlitze ist so lang wie die Übertragungszeit für ein einzelnes der Datentelegramme zuzüglich ggf. einer Verarbeitungszeit für die Verarbeitung des Datentelegramms auf Seiten des Empfangsteils und / oder des Messtasters.

Dabei kann im Fall einer Anordnung von zwei mit dem Empfangsteil kommunizierenden Messtastern der eine Messtaster im 1., 3., und 9. Zeitschlitz, und der andere Messtaster im 1., 5, und 9. Zeitschlitz senden. In einer Alternative dazu kann im Fall einer Anordnung von zwei mit dem Empfangsteil kommunizierenden Messtastern der eine Messtaster im 1., 3., und 5. Zeitschlitz, und der andere Messtaster im 1., 5, und 11. Zeitschlitz senden. Die zeitliche Abfolge von elf Zeitschlitzen beginnt dabei für jeden der Messtaster mit dem Aussenden seines jeweils ersten Datentelegramms.

Wenn nun zum Beispiel der erste Messtaster den Messzyklus beginnt, sendet er im 1., 3., und 5. Zeitschlitz. Falls der zweite Messtaster genau einen Zeitschlitz später beginnt, fällt sein erstes Datentelegramm genau zwischen den 1. und den 3. Zeitschlitz des ersten Messtasters. Somit können die beiden Datentelegramme beider Messtaster sofort und ohne Verzögerung vom Empfangsteil ausgewertet und weitergeleitet werden.

Durch zeitliches Verschieben der beiden Zeitschlitz-Schemata gegeneinander ist unmittelbar nachzuvollziehen, dass in jedem Fall zumindest ein Datentelegramm von jedem der beiden Messtaster ungestört an das Empfangsteil gesendet werden kann.

Diese Verteilung der drei Datentelegramme auf die elf Zeitschlitze stellt sicher, dass auch bei zeitlich versetztem Aussenden der jeweiligen drei Datentelegramme durch die beiden Messtaster zumindest ein Datentelegramm jedes Messtasters nicht mit anderen Datentelegrammen des anderen Messtasters zeitlich kollidiert.

Sobald das Empfangsteil ein Datentelegramm eines Messtasters ungestört empfangen hat, kann in einer Variante durch das Empfangsteil anhand der Ordnungszahl des Datentelegramm ausgewertet werden, ob von einem Messtaster das erste, das zweite, oder das dritte Datentelegramm ungestört empfangen wurde. Basierend hierauf werden durch das Empfangsteil vor dem Weitersenden der charakteristischen Statusinformation aus dem Datentelegramm entsprechende Verzögerungszeiten eingehalten, um die Zeit zwischen einer Antastung am Werkstück und Ausgabe des Schaltsignals durch das Empfangsteil stets zumindest annähernd konstant zu halten.
Die jeweiligen Messtaster und das Empfangsteil können je nach Anwendungsfall oder Einsatzsituation durch einen leitungs-, einen freien funkstrecken-, oder einen freien lichtstrecken-gebundenen gemeinsamen Übertragungskanal miteinander kommunizieren. Schließlich wird hier ein Messtaster vorgeschlagen, der auch zur Übertragung von in gemeinsam mit wenigstens einem weiteren Messtaster ausgeführten Messungen gewonnenen Messsignalen in einem Bearbeitungszentrum speziell eingerichtet und geeignet ist. Insbesondere ist jeder Messtaster dazu eingerichtet, jeweils in einer Spindel des Bearbeitungszentrums aufgenommen zu sein. Jeder Messtaster hat ein Gehäuse, in dem ein Stützlager ausgebildet ist, das eine X, Y -Lagerebene und eine dazu normale zentrale Achse Z des Messtasters definiert. An einem Tragkörper ist eine Taststiftaufnahme zentral angeordnet, um einen Taststift aufzunehmen und ein Übertragungsglied ist im Gehäuse entlang der zentralen Achse Z verschiebbar geführt, um beliebige Auslenkungen des Tragkörpers aus seiner Ruhelage in geradlinige Bewegungen umzusetzen. Ein Sensor setzt die Bewegungen des Übertragungsgliedes in Messsignale um, die in einer messtasterseitigen Signalaufbereitungseinheit zum Aussenden an ein Empfangsteil aufbereitet werden. Die Signalaufbereitungseinheit ist dazu eingerichtet und programmiert, Datentelegramme über einen für alle dem Empfangsteil zugeordneten, gemeinsamen Übertragungskanal zum Empfang durch das Empfangsteil gemäß dem oben beschriebenen Verfahren auszusenden.
Schließlich wird hier auch ein Empfangsteil vorgestellt zum Empfang von in gemeinsam ausgeführten Messungen gewonnenen Messsignalen wenigstens zweier, jeweils in einer Spindel eines Bearbeitungszentrums aufzunehmender Messtaster. Das Empfangsteil ist dazu eingerichtet, zu ermitteln ob von einem Messtaster das erste, das zweite, oder das dritte Datentelegramm empfangen wurde, und ist eingerichtet entsprechende Verzögerungszeiten vor dem Weitersenden der charakteristischen Statusinformation aus dem Datentelegramm einzuhalten, um die Zeit zwischen einer Antastung am Werkstück und Ausgabe des Schaltsignals durch das Empfangsteil stets zumindest annähernd konstant zu halten.

### Kurzbeschreibung der Zeichnung

Weitere Ziele, Merkmale, Vorteile und Anwendungsmöglichkeiten ergeben sich aus der nachfolgenden Beschreibung einiger Ausführungsbeispiele und zugehöriger Zeichnungen. Dabei bilden alle beschriebenen und/oder bildlich dargestellten Merkmale für sich oder in beliebiger Kombination den hier offenbarten Gegenstand, auch unabhängig von ihrer Zusammenstellung in der Beschreibung oder der Zeichnungen, oder ihrer Gruppierung in den Ansprüchen oder deren Rückbeziehungen.
Fig. 1 zeigt schematisch ein Bearbeitungszentrum, die mit einem Empfangsteil gekoppelt ist, das dazu eingerichtet ist, von mehreren, hier zwei, jeweils in einer Spindel des Bearbeitungszentrums aufgenommene Messtaster Datentelegramme zu empfangen und an eine CNC-Steuerung des Bearbeitungszentrums zu senden.
Fig. 2a zeigt ein Flussdiagramm einer hier vorgestellten Verfahrensvariante, wobei
Fig. 2b den Ablauf der Datentelegrammerstellung erläutert.
Fig. 2c zeigt ein Zeitdiagramm zu dem hier vorgestellten Datenübertragungsbetrieb.
Fig. 2d zeigt ein weiteres Zeitdiagramm zu dem hier vorgestellten Datenübertragungsbetrieb.
Fig. 2e zeigt ein weiteres Zeitdiagramm mit verwendeten Zeitschlitzen.
Fig. 3 zeigt eine Situation im Normalbetrieb. Fig. 3a - 3d zeigen unterschiedliche Übertragungsszenarien gemäß einer hier vorgestellten Verfahrensvariante.
Fig. 4a zeigt das in Fig. 2b gezeigte Zeitmuster für drei Datentelegramme in der Variante 1.
Fig. 4b- 4f zeigen unterschiedliche Szenarien mit in Fig. 2b gezeigten Zeitmuster für drei Datentelegramme in der Variante 1.
Fig. 5 veranschaulicht die Situation mit mehreren Messtastern MTA ... MTm, welche über einen gemeinsamen Übertragungskanal zu dem Empfangsteil ET ihre Datentelegramme aussenden. Außerdem veranschaulicht Fig. 5 die elektromechanische Funktion der Messtaster.

### Detaillierte Beschreibung der Zeichnung

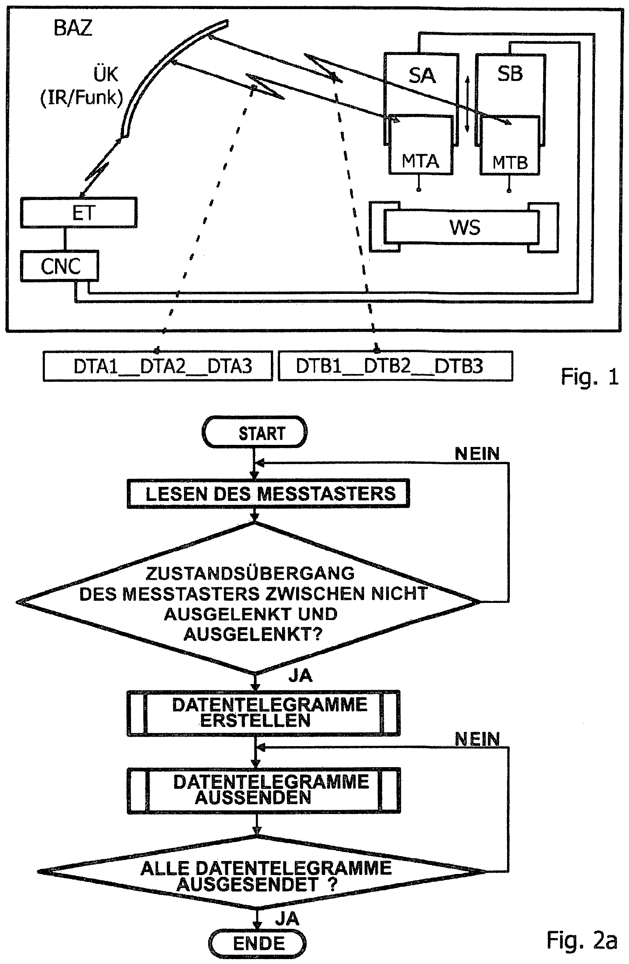

Fig. 1 veranschaulicht schematisch ein Bearbeitungszentrum BAZ mit zwei Spindeln SA, SB, mit denen im Bertrieb des Bearbeitungszentrums BAZ ein Werkstück WS bearbeitet (gefräst, gebohrt, oder dergl.) wird. Das Bearbeitungszentrum BAZ hat eine CNC-Steuerung. Die beiden Spindeln SA, SB sind hier in drei orthogonalen Richtungen X, Y, Z innerhalb eines Arbeitsraums des Bearbeitungszentrums relativ zum Werkstück WS beweg- und antreibbar. In einem Bearbeitungszentrum mit zwei Spindeln können zum Beispiel zwei Werkstücke gleichzeitig bearbeitet werden, oder an dem Werkstück WS können wie hier gezeigt, beide Spindeln SA, SB gleichzeitig arbeiten. In der hier gezeigten Situation wurden bereits durch einen nicht weiter veranschaulichten automatischen Werkzeugwechsler, von der CNC-Steuerung veranlasst, jeweils ein Messtaster MTA, MTB in die jeweilige Spindel SA, SB eingewechselt, um das mit der jeweiligen Spindel SA, SB bearbeitete Werkstück WS auch zu vermessen.

Die hier gezeigten Messtaster MTA, MTB funktionieren berührend; sie detektieren jeweils eine (Werkstück-)Oberfläche bei Kontakt mit dieser. Für jedes detektierte Merkmal geben die Messtaster MTA, MTB entsprechende Messsignale aus. Ein solcher Messtaster der Anmelderin ist zum Bespiel in der DE 102 62 188 A1 offenbart, auf deren Inhalt hier Bezug genommen wird. Die Übertragung der Messsignale von jedem der Messtaster MTA, MTB zu einem stationären Empfangsteil ET erfolgt drahtlos entweder durch optische Signale oder durch Funksignale. Durch die nachstehend erläuterte Vorgehensweise bei der Signalübertragung zwischen den beiden Messtastern MTA, MTB und dem stationären Empfangsteil ET ist es möglich, dass sie denselben Übertragungskanal ÜK nutzen. Sofern der Übertragungskanal ÜK eine Lichtstrecke ist, benutzen die beiden Messtaster MTAA, MTB Lichtsignale gleicher Wellenlänge und Modulationsschemata; ist der Übertragungskanal ÜK eine Funkstrecke, benutzen die beiden Messtaster MTA, MTB gleiche Trägerfrequenzen und Modulationsschemata. Damit ist es möglich, dass beide Messtaster MTAA, MTB mit ein und demselben stationären Empfangsteil ET über einen Übertragungskanal ÜK kommunizieren.

| | | |
|---|---|---|
| Messtaster A → | Übertragungskanal ÜK → | Empfangsteil ET |
| Messtaster B → | | |

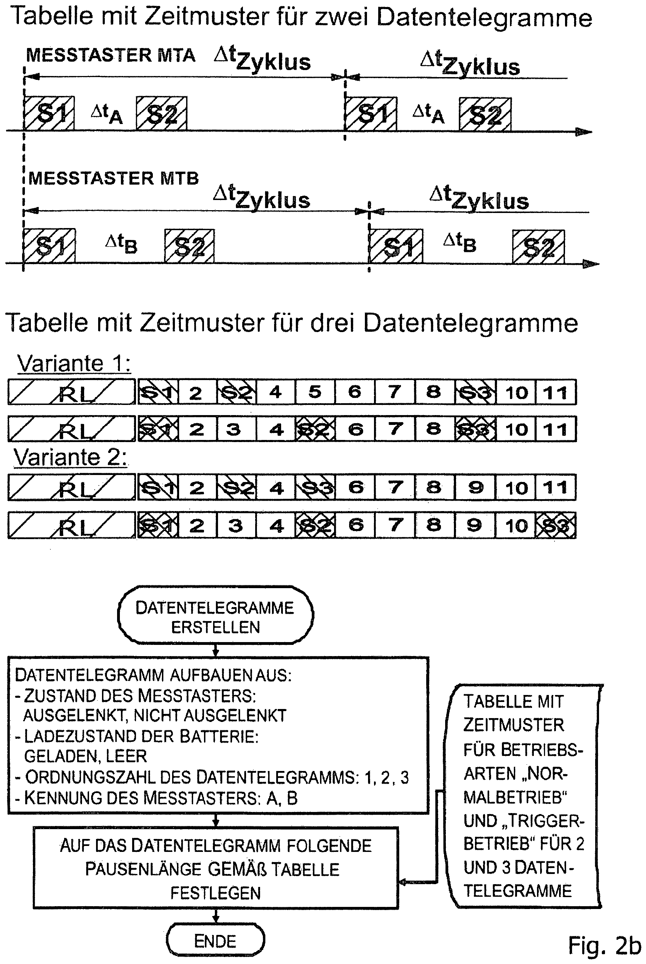

Fig. 2a zeigt ein Flussdiagramm einer hier vorgestellten Verfahrensvariante zur Erstellung und dem Aussenden der Datentelegramme. Dabei erläutert Fig. 2b den Ablauf der Datentelegrammerstellung.

In der in Fig. 2b gezeigten Tabelle mit Zeitmuster für zwei Datentelegramme bedeuten:
Obere Tabelle
ΔtA die Zeit zwischen Datentelegramm 1 und Datentelegramm 2 von Messtaster MTA
S1 das Datentelegramm 1, gesendet von Messtaster MTA
S2 das Datentelegramm 2, gesendet von Messtaster MTA
Δt_{Zyklus} die Zykluszeit, nach der die nächste Folge an Datentelegrammen gesendet wird.
Untere Tabelle
ΔtB ist die Zeit zwischen Datentelegramm 1 und Datentelegramm 2 von Messtaster MTB
S1 das Datentelegramm 1, gesendet von Messtaster MTB
S2 das Datentelegramm 2, gesendet von Messtaster MTB
Δt_{Zyklus} die Zykluszeit, nach der die nächste Folge an Datentelegrammen gesendet wird.

Der Sendezyklus Δt_{Zyklus} ist bei Messtaster MTA und bei Messtaster MTB gleich. Der Sendeabstand zwischen dem 1. und dem 2. Datentelegramm ist für die beiden Messtaster MTA, MTB unterschiedlich und wird so dimensioniert, dass auch bei gleichzeitigem Sendebeginn der beiden Messtaster MTA, MTB immer ein Datentelegramm ungestört übertragen wird.

In der in Fig. 2b gezeigten Tabelle mit einem Zeitmuster für drei Datentelegramme bedeuten 1 ... 11 die Zeitschlitze, in denen die Datentelegramme eines Messtasters und die dazwischen eingefügten Pausen liegen. Jeder Zeitschlitz 1 ... 11 hat eine Sendelänge eines Datentelegramms zzgl. ggf. einer Dekodierzeit für die Verarbeitung des Datentelegramms. RL bezeichnet die Ruhelage der Messtaster MTA, MTB, und S1, S2, S3 sind die drei Datentelegramme.

Dabei sendet in der Variante 1 der eine Messtaster MTA im 1., 3., und 9. Zeitschlitz (siehe obere Zeile der Variante 1), und der andere Messtaster MTB im 1., 5, und 9. Zeitschlitz (siehe untere Zeile der Variante 1). In einer dazu alternativen Variante 2 sendet der eine Messtaster MTA im 1., 3., und 5. Zeitschlitz (siehe obere Zeile der Variante 2), und der andere Messtaster im 1., 5, und 11. Zeitschlitz (siehe untere Zeile der Variante 2).

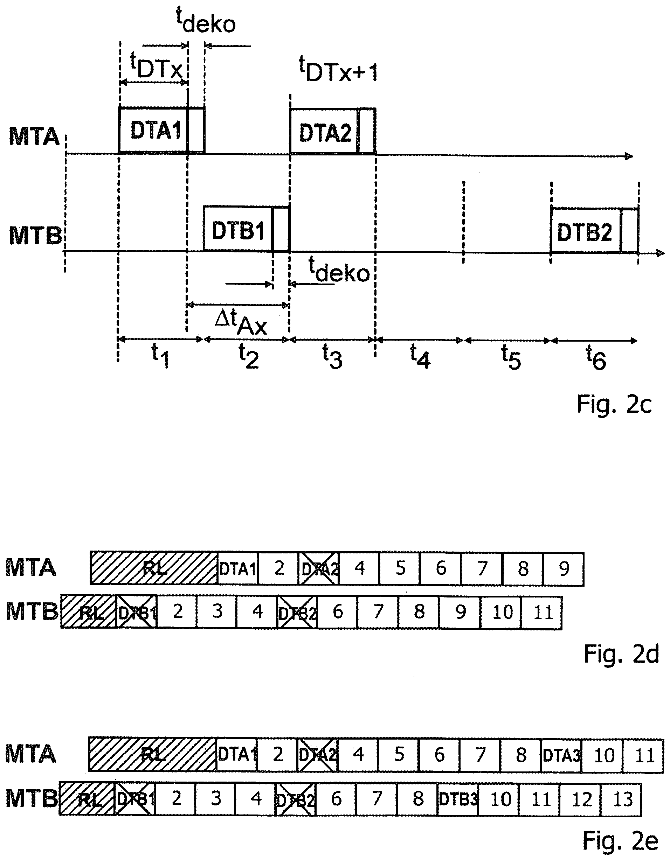

In dem in Fig. 2c gezeigten Zeitdiagramm zu dem hier vorgestellten Datenübertragungsbetrieb erfüllen zwei aufeinander folgende Datentelegramme DTAx und DTAx+1 folgende Bedingungen: (i) Die Datentelegramme eines ersten Messtasters MTA liegen zeitlich so weit auseinander, dass ein Datentelegramm eines zweiten Messtasters MTB zeitlich dazwischen passt. (i) Nach einem Datentelegramm wird eine Dekodierzeit (tdeko) eingehalten, wobei in diesen Zeitraum kein Datentelegramm fallen darf. Während dieser Dekodierzeit kann ein Empfangsteil das Datentelegramm empfangen, auswerten und verarbeiten, um anschließend empfangsbereit für ein folgendes Datentelegramm zu sein. (iii) Der zeitliche Abstand zwischen zwei Datentelegrammen beträgt also mindestens die Zeit für ein Datentelegramm plus zwei Dekodierzeiten: Δ_{tAx} = t_{DTx} + 2*t_{deko}

Damit wird gewährleistet, dass DTA1 und DTA2 und DTB1 empfangen werden können. Zwei aufeinander folgende Datentelegramme DTB1 und DTB2 liegen zeitlich so weit auseinander, dass die Kombination aus DTA1 und DTA2 (von MTA) dazwischen passt.

In dem in Fig. 2d gezeigten Zeitdiagramm zu dem hier vorgestellten Datenübertragungsbetrieb ist bei einem Übergang von einem Normalbetrieb in einen Triggerbetrieb zu beachten, dass ein Telegramm in der Ruhelage RL zu jedem beliebigen Zeitpunkt vor einem Datentelegramm DT1 auftreten kann, also unsynchronisiert zu dem Datentelegramm DT1 auftritt. Daher wäre ein zweifaches Aussenden der Datentelegramme nicht in allen Szenarien ausreichend; vielmehr sind weitere Vorkehrungen zu treffen (zum Beispiel ein drittes Datentelegramm auszusenden).

Diese Abfolge wird nicht einfach im gleichen Abstand und Zeitmuster fortgesetzt. Vielmehr wird ein drittes Datentelegramm DT3 des ersten Messtasters MTA so angeordnet, dass eine Abfolge von zwei Datentelegrammen des zweiten Messtasters MTB in den Zwischenraum passen würde. Bei einer hier gewählten Variante, belegen die Datentelegramme des ersten Messtasters MTA Zeitschlitz 1, Zeitschlitz 3 und Zeitschlitz 9, und die Datentelegramme des zweiten Messtasters MTB belegt Zeitschlitz 1, Zeitschlitz 5, Zeitschlitz 9 (siehe das in Fig. 2e gezeigte Zeitdiagramm). So werden Inhalten der gestörten Datentelegramme DTB1 und DTB2 des zweiten Messtasters MTB im dritten Datentelegramm DTB3 ungestört übertragen.

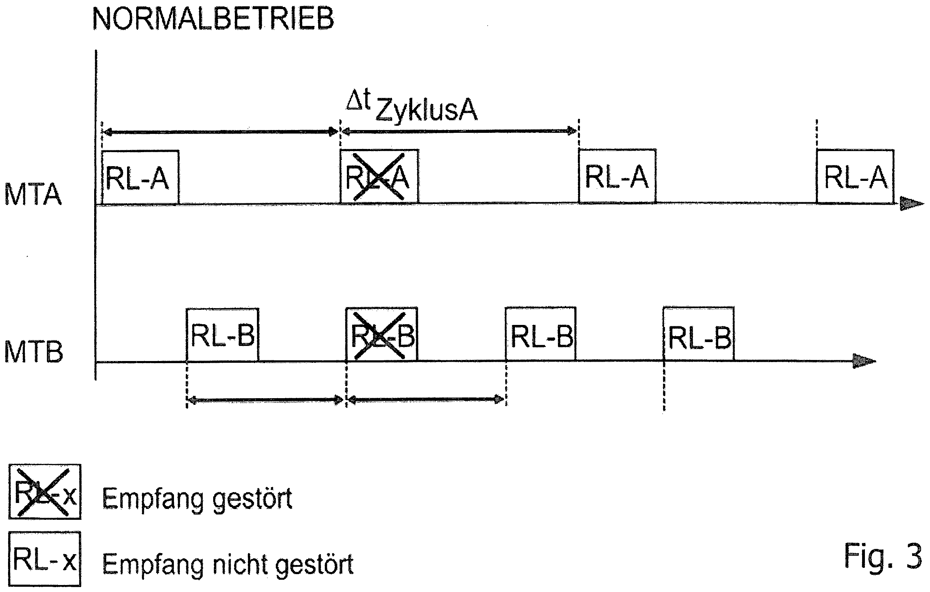

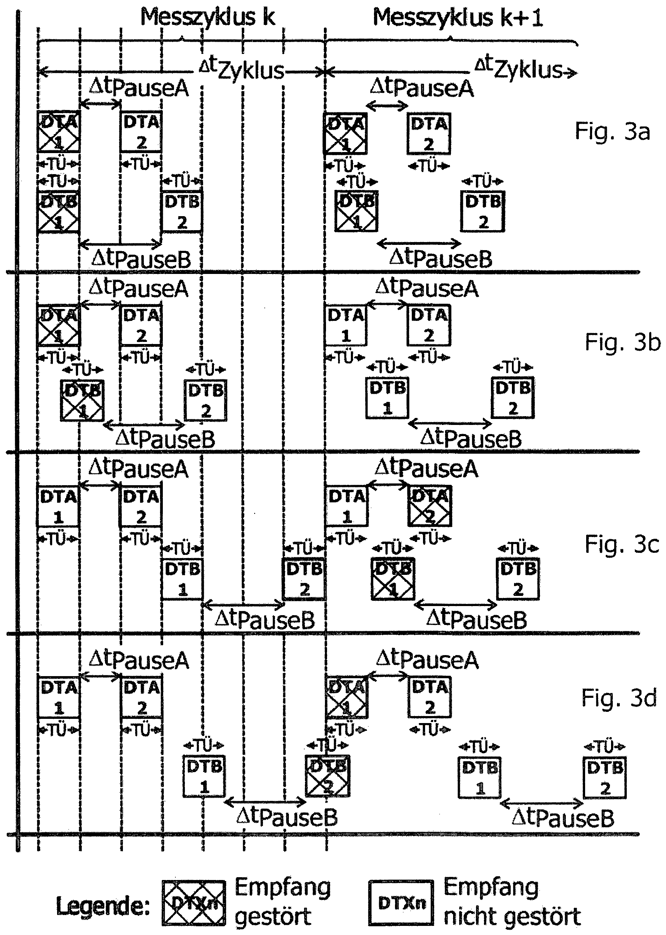

In Fig. 3 ist eine Situation im Normalbetrieb veranschaulicht, wobei durch die unterschiedlichen Zykluszeiten der Datentelegramme der beiden Messtaster MTA, MTB die jeweiligen Ruhelagetelegramme RLA, RLB in der Regel ungestört übertragen werden.

Die Fig. 3a - 3d zeigen unterschiedliche Übertragungsszenarien bei einer Verfahrensvariante mit zwei Datentelegrammen, wie sie zum Beispiel im Normalmodus verwendet werden kann.

Die einzelnen Datentelegramme sind hier mit DTXn bezeichnet, wobei X je nach Messtaster für A oder B steht, und n für die Ordnungszahl 1 oder 2 des Datentelegramms.

Dabei kollidieren schraffierte Datentelegramme, während die Datentelegramme ohne Schraffur von dem Empfangsteil ET ungestört empfangen werden können. TÜ bezeichnet die Übertragungszeit eines einzelnen Datentelegramms.

Zwischen dem Beginn zweier Datentelegramme eines Messtasters mit der gleichen Ordnungszahl n verstreicht eine im Wesentlichen konstante Zykluszeit Δt_{Zyklus}. Zwischen aufeinander folgenden Datentelegrammen DTA1, DTA2; DTB1, DTB2 eines Messtasters MTA, MTB mit unterschiedlicher Ordnungszahl n verstreicht jeweils eine im Wesentlichen konstante Pausenzeit Δt_{PauseA}, Δt_{PauseB}. Die Pausenzeit Δt_{PauseA}, Δt_{PauseB} zwischen den Datentelegrammen für jeden der jeweiligen Messtaster ist in Abhängigkeit von der Anzahl der mit dem Empfangsteil ET kommunizierenden Messtaster MTA, MTB - hier zwei - in dem Bearbeitungszentrum BAZ, der Zykluszeit Δt_{Zyklus} jedes der Messtaster MTA, MTB zwischen zwei ihrer Datentelegramme DTA1, DTB1 ... DTAn, DTBn mit der gleichen Ordnungszahl n und der Übertragungszeit TÜ für ein einzelnes der Datentelegramme DTA1, DTB1 ... DTAn, DTBn unterschiedlich.

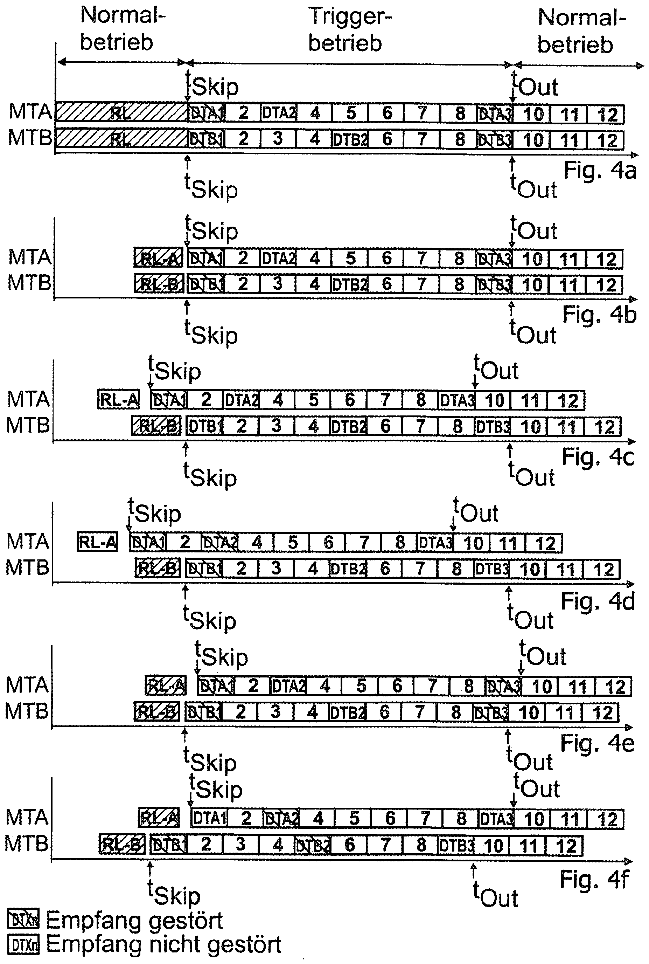

In der in Fig. 4a veranschaulichten Situation ist das in Fig. 2b gezeigte Zeitmuster für drei Datentelegramme in der Variante 1 sind die zuletzt gesendeten Ruhelage-Datentelegramme RL als Grundlage für die folgenden Übertragungsszenarien veranschaulicht. In der Fig. 4a und den folgenden Fig. 4b - 4f kennzeichnet t_{Skip} den Zeitpunkt in der Abfolge der Datentelegramme, an dem ein jeweiliger Messtaster am Werkstück antastet. Zu diesem Zeitpunkt t_{Skip} wird vom Normalbetrieb in den Triggerbetrieb gewechselt und der Messtaster beginnt das Senden der Abfolge an Datentelegrammen für den Triggerbetrieb.

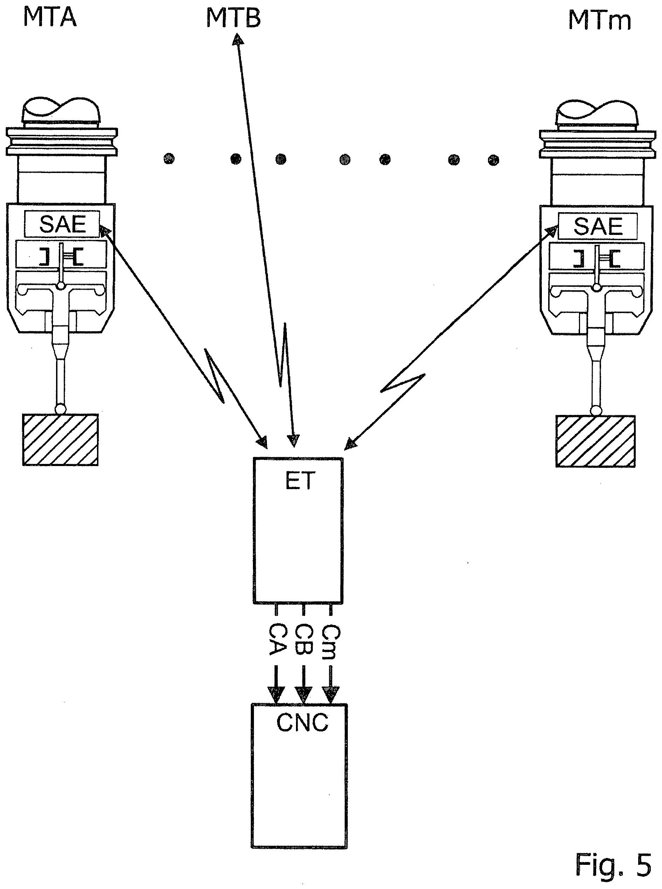

In der Fig. 4a und den folgenden Fig. 4b - 4f kennzeichnet t_{Out} den Zeitpunkt, an dem das Empfangsteil (Fig. 5, ET) den empfangenen Status an die Maschinensteuerung (CNC) weitergibt.

Die hier vorgestellte Vorgehensweise stellt insgesamt sicher, dass einerseits die Zeitdifferenz zwischen den Zeitpunkten t_{Skip} und t_{Out} möglichst kurz ist, und andererseits, dass diese Zeitdifferenz in allen Fällen gleich lang ist.

In der in Fig. 4b veranschaulichten Situation, mit dem der in Fig. 2b gezeigten Zeitmuster für drei Datentelegramme in der Variante 1 sind die zuletzt gesendeten Ruhelage-Datentelegramme RL sowie die Datentelegramme DTA1, BTB1 gestört. Die Schaltpunkt-Datentelegramme DTA2, BTB2 werden jedoch zeitversetzt gesendet und daher richtig durch das Empfangsteil ET empfangen. Der Signalausgang CA des Empfangsteils ET zu der CNC-Steuerung für den Messtaster MTA wird nach einer Verzögerungszeit von 8 Zeitrastern aktiv geschaltet. Der Signalausgang CB des Empfangsteils ET zu der CNC-Steuerung für den Messtaster MTB wird nach einer Verzögerungszeit von 8 Zeitrastern aktiv geschaltet.

In der in Fig. 4c veranschaulichten Situation (ebenfalls Variante 1 aus Fig. 2b für drei Datentelegramme) kollidieren der Schaltpunkt des Messtasters MTA im Datentelegramm DTA1 mit dem Ruhelage-Datentelegramm RL-B des Messtasters MTB. Alle nachfolgenden Datentelegramme der Messtaster MTA und MTB können richtig durch das Empfangsteil ET empfangen werden. Der Signalausgang CA des Empfangsteils ET zu der CNC-Steuerung für den Messtaster MTA wird nach einer Verzögerungszeit von 6 Zeitrastern nach dem Empfang / Decodieren des Datentelegramms DTA2 des ersten Messtasters MTA aktiv geschaltet. Der Signalausgang CB des Empfangsteils ET zu der CNC-Steuerung für den Messtaster MTB wird nach einer Verzögerungszeit von 8 Zeitrastern nach dem Empfang / Decodieren des ersten Datentelegramms DTB1 des zweiten Messtasters MTB aktiv geschaltet.

In der in Fig. 4d veranschaulichten Situation (ebenfalls Variante 1 aus Fig. 2b für drei Datentelegramme) kollidieren der Schaltpunkt des ersten Messtasters MTA im Datentelegramm DTA1 mit dem Ruhelage-Datentelegramm RL-B des zweiten Messtasters MTB, sowie die Datentelegramme DTB1 und DTA2 der ersten und zweiten Messtaster MTA, MTB. Das zweite Datentelegramm DTB2 des zweiten Messtasters MTB und das dritte Datentelegramm DTA3 des ersten Messtasters MTA können richtig durch das Empfangsteil ET empfangen werden. Der Signalausgang CA des Empfangsteils ET zu der CNC-Steuerung für den Messtaster MTA wird unmittelbar nach dem Empfang / Decodieren des dritten Datentelegramms DTA3 des ersten Messtasters MTA aktiv geschaltet. Der Signalausgang CB des Empfangsteils ET zu der CNC-Steuerung für den Messtaster MTB wird nach einer Verzögerungszeit von 4 Zeitrastern nach dem Empfang / Decodieren des zweiten Datentelegramms DTB2 des zweiten Messtasters MTB aktiv geschaltet.

In der in Fig. 4e veranschaulichten Situation (ebenfalls Variante 1 aus Fig. 2b für drei Datentelegramme) kollidieren die beiden Ruhelage-Datentelegramme RL-A und RL-B des ersten und des zweiten Messtasters MTA, MTB, sowie die ersten Datentelegramme DTA1, DTB1 der ersten und zweiten Messtaster MTA, MTB. Die zweiten Datentelegramme DTA2, DTB2 der ersten und zweiten Messtaster MTA, MTB können richtig durch das Empfangsteil ET empfangen werden. Der Signalausgang CA des Empfangsteils ET zu der CNC-Steuerung für den Messtaster MTA wird nach einer Verzögerungszeit von 6 Zeitrastern nach dem Empfang / Decodieren des dritten Datentelegramms DTA3 des ersten Messtasters MTA aktiv geschaltet. Der Signalausgang CB des Empfangsteils ET zu der CNC-Steuerung für den Messtaster MTB wird nach einer Verzögerungszeit von 4 Zeitrastern nach dem Empfang / Decodieren des zweiten Datentelegramms DTB2 des zweiten Messtasters MTB aktiv geschaltet.

In der in Fig. 4f veranschaulichten Situation (ebenfalls Variante 1 aus Fig. 2b für drei Datentelegramme) kollidieren das Ruhelage-Datentelegramm RL-B und das erste Datentelegramm DTB1 des ersten Messtasters MTB mit dem Ruhelage-Datentelegramm RL-A des ersten Messtasters MTA, sowie die zweiten Datentelegramme DTA2, DTB2 der ersten und zweiten Messtaster MTA, MTB. Das erste Datentelegramm DTA1 des ersten Messtasters MTA und die dritten Datentelegramme DTA3, DTB3 des ersten und des zweiten Messtasters MTA, MTB können richtig durch das Empfangsteil ET empfangen werden. Der Signalausgang CA des Empfangsteils ET zu der CNC-Steuerung für den Messtaster MTA wird nach einer Verzögerungszeit von 8 Zeitrastern nach dem Empfang / Decodieren des ersten Datentelegramms DTA1 des ersten Messtasters MTA aktiv geschaltet. Der Signalausgang CB des Empfangsteils ET zu der CNC-Steuerung für den Messtaster MTB wird unmittelbar nach dem Empfang / Decodieren des dritten Datentelegramms DTB3 des zweiten Messtasters MTB aktiv geschaltet.

Die in Fig. 5 veranschaulichten Messtaster sind auch zur Übertragung von in gemeinsam mit wenigstens einem weiteren Messtaster ausgeführten Messungen gewonnenen Messsignalen in einem Bearbeitungszentrum speziell eingerichtet und geeignet ist. Jeder Messtaster dazu eingerichtet, jeweils in einer Spindel des Bearbeitungszentrums aufgenommen zu sein. Jeder Messtaster hat ein Gehäuse, in dem ein Stützlager ausgebildet ist, das eine X, Y -Lagerebene und eine dazu normale zentrale Achse Z des Messtasters definiert. An einem Tragkörper ist eine Taststiftaufnahme zentral angeordnet, um einen Taststift aufzunehmen und ein Übertragungsglied ist im Gehäuse entlang der zentralen Achse Z verschiebbar geführt, um beliebige Auslenkungen des Tragkörpers aus seiner Ruhelage in geradlinige Bewegungen umzusetzen.

Ein Sensor setzt die Bewegungen des Übertragungsgliedes in Messsignale um, die in einer messtasterseitigen Signalaufbereitungseinheit SAE zum Aussenden an ein Empfangsteil ET aufbereitet werden. Die Signalaufbereitungseinheit SAE ist dazu eingerichtet und programmiert, Datentelegramme über einen für alle dem Empfangsteil ET zugeordneten, gemeinsamen Übertragungskanal zum Empfang durch das Empfangsteil ET auszusenden. Jeweils zwei oder mehr Datentelegramme werden von der Signalaufbereitungseinheit SAE des jeweiligen Messtasters MTA, MTB ... MTm ausgesendet. werden. Jedes der Datentelegramme umfasst eine für den jeweiligen Messtaster charakteristische Information, eine für den jeweiligen Messtaster charakteristische Kennnung, und eine Ordnungszahl des jeweiligen Datentelegramms, mit dem die charakteristische Information für den jeweiligen Messtaster ausgesendet wird.

Die Signalaufbereitungseinheit SAE des jeweiligen Messtasters sorgt dafür, dass zwischen dem Beginn zweier Datentelegramme eines Messtasters mit der gleichen Ordnungszahl eine im Wesentlichen konstante Zykluszeit verstreicht. Die Signalaufbereitungseinheit SAE des jeweiligen Messtasters sorgt auch dafür, dass zwischen aufeinander folgenden Datentelegrammen eines Messtasters mit unterschiedlicher Ordnungszahl jeweils eine im Wesentlichen konstante Pausenzeit verstreicht. Dabei sorgt die Signalaufbereitungseinheit des jeweiligen Messtasters dafür, dass die Pausenzeit zwischen den Datentelegrammen für jeden der jeweiligen Messtaster in Abhängigkeit von einer Anzahl der mit dem Empfangsteil kommunizierenden Messtaster in dem Bearbeitungszentrum, der Zykluszeit jedes der Messtaster zwischen zwei ihrer Datentelegramme mit der gleichen Ordnungszahl und/oder einer Übertragungszeit für ein einzelnes der Datentelegramme unterschiedlich ist.

Jeder der Messtaster kann mit einem Schalter ausgestattet sein, um die Signalaufbereitungseinheit SAE des jeweiligen Messtasters zwischen den unterschiedlichen Abfolgen der Datentelegramme umschalten zu können. Alternativ oder zusätzlich kann auch das Empfangsteil ET Signal mit einer entsprechenden Zuordnung aussenden, um die Signalaufbereitungseinheit SAE des jeweiligen Messtasters entsprechend zu programmieren.

Die vorangehend beschriebenen Varianten des Verfahrens und der Vorrichtung dienen lediglich dem besseren Verständnis der Struktur, der Funktionsweise und der Eigenschaften der vorgestellten Lösung; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches / welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Lösung zuzuschreiben sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst.

Die vorstehend erläuterten Vorrichtungs- und Verfahrensdetails sind zwar im Zusammenhang dargestellt; sie sind jedoch auch unabhängig voneinander und auch frei miteinander kombinierbar. Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

Auch die Ansprüche limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen hier offenbart.

## Patentansprüche

1. Verfahren zur Übertragung von in gemeinsam ausgeführten Messungen gewonnenen Messsignalen (MS) wenigstens zweier, jeweils in einer Spindel (SA, SB) eines Bearbeitungszentrums (BAZ) aufzunehmender Messtaster (MTA, MTB), enthaltend den Schritt
- Aussenden von Datentelegrammen (DTA1, DTB1 ... DTAn, DTBn) durch den jeweiligen Messtaster (MTA, MTB) über einen gemeinsamen Übertragungskanal (ÜK) zum Empfang durch ein Empfangsteil (ET), wobei
-- für jede Messung eines Messtasters (MTA, MTB) jeweils zwei oder mehr Datentelegramme (DTA1, DTB1 ... DTAn, DTBn) mit unterschiedlicher Ordnungszahl (n) ausgesendet werden, von denen jedes
--- eine für den jeweiligen Messtaster (MTA, MTB) charakteristische Statusinformation (STATUS),
--- eine für den jeweiligen Messtaster (MTA, MTB) charakteristische Kennung (MTK), und
--- die Ordnungszahl (n) des jeweiligen Datentelegramms (DTA1, DTB1 ... DTAn, DTBn), mit dem die charakteristische Statusinformation (STATUS) für den jeweiligen Messtaster (MTA, MTB) ausgesendet wird, wobei die Ordnungszahl (n) die Reihenfolge der für eine Messung eines Messtasters (MTA, MTB) ausgesendeten zwei oder mehr Datentelegramme (DTA1, DTB1 ... DTAn, DTBn) angibt,
umfasst, wobei
-- zwischen dem Beginn zweier Datentelegramme (DTA1, DTB1 ... DTAn, DTBn) eines Messtasters (MTA, MTB) mit der gleichen Ordnungszahl (n) eine im Wesentlichen konstante Zykluszeit (Δt_{Zyklus}) verstreicht,
-- zwischen aufeinander folgenden Datentelegrammen (DTA1, DTB1 ... DTAn, DTBn) einer Messung eines Messtasters (MTA, MTB) mit unterschiedlicher Ordnungszahl (n) jeweils eine im Wesentlichen konstante Pausenzeit (Δt_{PauseA}, Δt_{PauseB}) verstreicht, die mindestens eine einfache Übertragungszeit (TÜ) eines einzelnen der Datentelegramme (DTA1, DTB1 ... DTAn, DTBn) beträgt, und wobei
-- die Pausenzeit (Δt_{PauseA}, Δt_{PauseB}) zwischen den Datentelegrammen (DTA1, DTB1 ... DTAn, DTBn) für jeden der jeweiligen Messtaster (MTA, MTB) in Abhängigkeit von
--- einer Anzahl der mit dem Empfangsteil (ET) kommunizierenden Messtaster (MTA, MTB) in dem Bearbeitungszentrum (BAZ), und
--- der Zykluszeit (Δt_{Zyklus}) jedes der Messtaster (MTA, MTB) zwischen zwei ihrer Datentelegramme (DTA1, DTB1 ... DTAn, DTBn) mit der gleichen Ordnungszahl (n), und
--- der Übertragungszeit (TÜ) für ein einzelnes der Datentelegramme (DTA1, DTB1 ... DTAn, DTBn), unterschiedlich ist, sodass jedes der Datentelegramme (DTA1, DTB1 ... der wenigstens zwei Messtaster (MTA, MTB) in einem definierten zeitlichen Raster versendet wird, das für jeden der wenigstens zwei Messtaster (MTA, MTB) unterschiedlich und derart festgelegt ist, dass auch bei gleichzeitigem Sendebeginn des Aussendens von Datentelegrammen (DTA1, DTB1 ... DTAn, DTBn) durch die wenigstens zwei Messtaster (MTA, MTB) immer wenigstens eines der zwei oder mehr Datentelegramme (DTA1, DTB1 ... DTAn, DTBn) einer Messung eines jeden der wenigstens zwei Messtaster (MTA, MTB) nicht zeitlich überlappend mit Datentelegrammen (DTA1, DTB1 ... DTAn, DTBn) eines jeden anderen der wenigstens zwei Messtaster (MTA, MTB) ausgesendet wird.

2. Verfahren nach Anspruch 1, wobei
-- die zwei oder mehr Datentelegramme (DTA1, DTB1 ... DTAn, DTBn) jeweils zu einer Messung eines der Messtaster (MTA, MTB) ausgesendet werden, und
-- die von dem jeweiligen Messtaster in den Datentelegrammen (DTA1, DTB1 ... DTAn, DTBn) auszusendende charakteristische Statusinformation sich in Abhängigkeit vom Vorliegen einer von zwei Betriebsarten "Normalbetrieb" und "Triggerbetrieb", für den jeweiligen Messtaster (MTA, MTB) ändert, und/oder mit den weiteren Schritten
- Aussenden eines Aktivierungssignals (AWA, AWB) an die jeweiligen Messtaster (MTA, MTB) um deren Aussenden der Datentelegramme (DTA1, DTB1 ... DTAn, DTBn) zu initiieren;
- Auswerten der Datentelegramme (DTA1, DTB1 ... DTAn, DTBn) nach deren Empfang durch das Empfangsteil (ET), und
- Ausgeben eines für das das jeweilige Messsignal (MS) charakteristischen Ausgangssignals (AS) durch das Empfangsteil (ET) an eine numerische Steuerung (CNC) des Bearbeitungszentrums (BAZ).

3. Verfahren nach einem der Ansprüche 1 - 2, wobei
- das Aktivieren jedes der Messtaster (MTA, MTB) mittels eines dedizierten Aktivierungssignals (AWA, AWB) für den jeweiligen der Messtaster (MTA, MTB) erfolgt, oder
- das Aktivieren der Messtaster (MTA, MTB) mittels eines gemeinsamen Aktivierungssignals (AWA, AWB) für alle Messtaster (MTA, MTB) erfolgt, und/ oder
- das oder jedes der Aktivierungssignale (AWA, AWB)
-- von dem Empfangsteil (ET) und/ oder
-- von der numerischen Steuerung (CNC) des Bearbeitungszentrums (BAZ) an die Messtaster (MTA, MTB) ausgesendet wird.

4. Verfahren nach einem der vorhergehenden Ansprüche, wobei die für das jeweilige Messsignal (MS) charakteristische Statusinformation (STATUS) die Zustände
- "Messtaster ist in Ruhelage",
- "Messtaster ist ausgelenkt", und/oder die Zustände
- "Batterie des Messtasters ist gut"
- "Batterie des Messtasters ist leer", und/oder die Zustände
- "Schaltpunkt 1",
- "Schaltpunkt 2"...
- "Schaltpunkt n",
umfasst.

5. Verfahren nach dem vorhergehenden Anspruch, wobei
die Messtaster (MTA, MTB) nach ihrem Aktivieren ihre Datentelegramme (DTA1, DTB1 ... DTAn, DTBn) in vorbestimmten Zeitintervallen an das Empfangsteil (ET) aussenden, und wobei das Empfangsteil (ET) überwacht, ob eine Kommunikation mit den Messtastern (MTA, MTB) fortwährend besteht, und /oder ob
der Zustand "Batterie des Messtasters ist gut" in "Batterie des Messtasters ist leer" für einen der Messtaster (MTA, MTB) gewechselt hat, um dann ein hierfür charakteristisches Warnsignal abzugeben.

6. Verfahren nach einem der vorhergehenden Ansprüche, wobei
die Zykluszeit (Δt_{Zyklus}) zwischen zwei Datentelegrammen (DTA1, DTB1 ... DTAn, DTBn) eines Messtasters (MTA, MTB) mit der gleichen Ordnungszahl (n) für alle Messtaster (MTA, MTB) zumindest annähernd identisch ist, und/oder wobei die Übertragungszeit der Datentelegramme (DTA1, DTB1 ... DTAn, DTBn) für alle Datentelegramme (DTA1, DTB1 ... DTAn, DTBn) aller Messtaster (MTA, MTB) zumindest annähernd identisch ist, und/oder wobei
die Pausenzeit (Δt_{PauseA}, Δt_{PauseB}) zwischen den Datentelegrammen (DTA1, DTB1 ... DTAn, DTBn) einer jeweiligen Messung für jeden der jeweiligen Messtaster (MTA, MTB) in Abhängigkeit von
--- einer Anzahl der mit dem Empfangsteil (ET) kommunizierenden Messtaster (MTA, MTB) in dem Bearbeitungszentrum (BAZ), und
--- einer Übertragungszeit für ein einzelnes der Datentelegramme (DTA1, DTB1 ... DTAn, DTBn)
unterschiedlich ist, und/oder wobei
die zu verstreichende Pausenzeit zwischen den Datentelegrammen (DTA1, DTB1 ... DTAn, DTBn) des einen Messtasters (MTA, MTB) mindestens die einfache Übertragungszeit eines einzelnen der Datentelegramme (DTA1, DTB1 ... DTAn, DTBn) beträgt, und/oder
die zu verstreichende Pausenzeit zwischen den Datentelegrammen (DTA1, DTB1 ... DTAn, DTBn) des anderen Messtasters (MTA, MTB) höchstens die doppelte Übertragungszeit eines einzelnen der Datentelegramme (DTA1, DTB1 ... DTAn, DTBn) beträgt, und/oder wobei
die Zykluszeiten aller der Messtaster (MTA, MTB) und der Pausenzeiten zwischen den Datentelegrammen (DTA1, DTB1 ... DTAn, DTBn) der Messtaster (MTA, MTB) abhängig von der Anzahl der Spindeln im Bearbeitungszentrum und der Anzahl der von einem Messtaster (MTA, MTB) zu einer Messung an das Empfangsteil gesendeten Datentelegramme (DTA1, DTB1 ... DTAn, DTBn) festgelegt werden, und/oder wobei
die Zykluszeiten aller Messtaster (MTA, MTB) und die Pausenzeiten zwischen den Datentelegrammen (DTA1, DTB1 ... DTAn, DTBn) jedes der Messtaster (MTA, MTB) so bestimmt werden, dass die Summe der Übertragungszeiten aller ersten Datentelegramme (DTA1, DTB1 ... DTAn, DTBn) der jeweils anderen Messtaster (MTA, MTB) kleiner oder gleich der Pausenzeit zwischen den Datentelegrammen (DTA1, DTB1 ... DTAn, DTBn) des jeweiligen Messtasters (MTA, MTB) ist.

7. Verfahren nach dem vorhergehenden Anspruch, wobei
die Zykluszeiten aller Messtaster (MTA, MTB) unterschiedlich lang gesetzt werden, so dass die Datentelegramme (DTA1, DTB1 ... DTAn, DTBn) aller Messtaster (MTA, MTB) zeitlich so ineinander geschachtelt werden, dass zumindest eines der Datentelegramme (DTA1, DTB1 ... DTAn, DTBn) jedes der Messtaster (MTA, MTB) nicht mit anderen Datentelegrammen (DTA1, DTB1 ... DTAn, DTBn) der anderen Messtaster (MTA, MTB) zeitlich überlappt, und/oder wobei
jeder der Messtaster (MTA, MTB) zu Beginn des Aussendens jedes der Datentelegramme (DTA1, DTB1 ... DTAn, DTBn) eine Sicherheitsphase lang nicht sendet, welche etwa 1 - 3 % der Übertragungszeit eines Datentelegramms (DTA1, DTB1 ... DTAn, DTBn) beträgt.

8. Verfahren nach einem der vorhergehenden Ansprüche, wobei
in einer Einlernphase aller Messtaster (MTA, MTB) (i) jeweils die charakteristische Kennung jedes der Messtaster (MTA, MTB) festgelegt werden, und /oder (ii) jedem der Messtaster (MTA, MTB) (i) die Zykluszeiten aller Messtaster (MTA, MTB) eingegeben werden, und /oder (iii) jedem der Messtaster (MTA, MTB) die Pausenzeiten für aufeinander folgende Datentelegramme (DTA1, DTB1 ... DTAn, DTBn) aller Messtaster (MTA, MTB) eingegeben werden, und/oder wobei
im Empfangsteil (ET) und/oder den Messtastern (MTA, MTB) für mögliche Varianten von (i) im Bearbeitungszentrum mit dem jeweiligen Empfangsteil (ET) eingesetzten Messtastern (MTA, MTB), und (ii) Anzahl der Datentelegramme (DTA1, DTB1 ... DTAn, DTBn) pro Messung, Tabellen mit passenden Zykluszeiten und Pausenzeiten hinterlegt werden, und/oder wobei
zum Auswerten der Datentelegramme auf Seiten des Empfangsteils (ET) anhand der Ordnungszahl eines ungestört empfangenen Datentelegramms, den Zykluszeiten und den Pausenzeiten jedes der Messtaster (MTA, MTB) ermittelt wird, wie viel Zeit seit der Erfassung des Messsignals vergangen ist, und/oder wobei in der Betriebsart "Triggerbetrieb" zu jeder Messung mit einem Zustands-Übergang des Messtasters (MTA, MTB) Datentelegramme (DTA1, DTB1 ... DTAn, DTBn) zusammengestellt werden, die für den jeweiligen Messtaster (MTA, MTB) den Zustands-Übergang des Messtasters, eine für den jeweiligen Messtaster (MTA, MTB) charakteristische Nummer oder Adresse des Messtasters (MTA, MTB), und eine Ordnungszahl des jeweiligen Datentelegramms (DTA1, DTB1 ... DTAn, DTBn), mit dem die charakteristische Information für den jeweiligen Messtaster (MTA, MTB) ausgesendet wird.

9. Verfahren nach einem der vorhergehenden Ansprüche, wobei
jeder Messtaster (MTA, MTB) die Datentelegramme (DTA1, DTB1 ... DTAn, DTBn) dreifach aussendet, wobei jeweils die Ordnungszahl des jeweiligen Datentelegramms um eins erhöht wird, und jedes der Datentelegramme (DTA1, DTB1 ... DTAn, DTBn) in einem definierten zeitlichen Raster versendet wird, die für jeden Messtaster (MTA, MTB) anders ist, wobei die zeitliche Abfolge der Datentelegramme (DTA1, DTB1 ... DTAn, DTBn) jedes einzelnen Messtasters (MTA, MTB) und der Pausen zwischen ihnen, sowie die zeitlichen Abfolgen der Datentelegramme (DTA1, DTB1 ... DTAn, DTBn) aller Messtaster (MTA, MTB) derart gestaltet sind, dass in einem definierten Zeitraum mindestens ein Datentelegramm jedes Messtasters (MTA, MTB) von Datentelegrammen (DTA1, DTB1 ... DTAn, DTBn) anderer Messtaster (MTA, MTB) ungestört an das Empfangsteil (ET) übertragen wird.

10. Verfahren nach dem vorhergehenden Anspruch, wobei
pro Messtaster drei Datentelegramme (DTA1, DTB1 ... DTAn, DTBn) und Pausen zwischen ihnen in einer zeitlichen Abfolge von elf Zeitschlitzen ausgesendet werden, wobei jeder der Zeitschlitze eine Dauer hat, die der Übertragungszeit für ein einzelnes der Datentelegramme zuzüglich einer Verarbeitungszeit für die Verarbeitung des Datentelegramms auf Seiten des Empfangsteils (ET) und/oder des Messtasters hat.

11. Verfahren nach dem vorhergehenden Anspruch, wobei
in einer Anordnung von zwei mit dem Empfangsteil (ET) kommunizierenden Messtastern
- der eine Messtaster im 1., 3., und 9. Zeitschlitz, und
- der andere Messtaster im 1., 5, und 9. Zeitschlitz senden, oder
- der eine Messtaster im 1., 3., und 5. Zeitschlitz, und
- der andere Messtaster im 1., 5, und 11. Zeitschlitz senden, und wobei die zeitliche Abfolge von elf Zeitschlitzen für jeden der Messtaster mit den Aussenden seines jeweils ersten Datentelegramms (DTA1, DTB1 ... DTAn, DTBn) beginnt.

12. Verfahren nach einem der vorhergehenden Ansprüche, wobei
nach einem ungestörten Empfangen eines Datentelegramms (DTA1, DTB1 ... DTAn, DTBn) eines Messtasters im Empfangsteil (ET) durch das Empfangsteil (ET) ausgewertet wird, ob von einem Messtaster das erste, das zweite, oder das dritte Datentelegramm (DTA1, DTB1 ... DTAn, DTBn) empfangen wurde, und entsprechende Verzögerungszeiten vor dem Weitersenden des der charakteristischen Information aus dem Datentelegramm (DTA1, DTB1 ... DTAn, DTBn) eingehalten werden, um die Zeit zwischen einer Antastung am Werkstück und Ausgabe des Schaltsignals durch das Empfangsteil (ET) stets zumindest annähernd konstant zu halten.

13. Verfahren nach einem der vorhergehenden Ansprüche, wobei
die jeweiligen Messtaster (MTA, MTB) und das Empfangsteil (ET) durch einen leitungs-, einen freien funkstrecken-, oder einen freien lichtstrecken-gebundenen gemeinsamen Übertragungskanal (ÜK) miteinander kommunizieren.

14. Messtaster (MTA, MTB) zur Verwendung in dem Verfahren nach einem der Ansprüche 1 bis 13 und zur Übertragung von in gemeinsam mit wenigstens einem weiteren Messtaster (MTA, MTB) ausgeführten Messungen gewonnenen Messsignalen (MS) wobei der Messtaster (MTA, MTB) dazu eingerichtet ist, in einer Spindel (SA, SB) eines Bearbeitungszentrums (BAZ), in dem der wenigstens eine weitere Messtaster (MTA, MTB) aufgenommen ist, aufgenommen zu werden, und wobei jeder Messtaster (MTA, MTB) ein Gehäuse hat, in dem ein Stützlager ausgebildet ist, das eine X, Y - Lagerebene und eine dazu normale zentrale Achse Z des Messtasters definiert, wobei an einem Tragkörper eine Taststiftaufnahme angeordnet ist um einen Taststift aufzunehmen und ein Übertragungsglied im Gehäuse entlang der zentralen Achse Z verschiebbar geführt ist, um Auslenkungen des Tragkörpers aus seiner Ruhelage in geradlinige Bewegungen umzusetzen, und wobei ein Sensor die Bewegungen des Übertragungsgliedes in Messsignale umsetzt, die in einer messtasterseitigen Signalaufbereitungseinheit (SAE) zum Aussenden an ein Empfangsteil (ET) des Bearbeitungszentrums (BAZ) aufbereitet werden, wobei die Signalaufbereitungseinheit (SAE) dazu eingerichtet und programmiert ist,
- Datentelegramme (DTA1, DTB1 ... DTAn, DTBn) über einen Übertragungskanal (ÜK) zum Empfang durch das Empfangsteil (ET) auszusenden, wobei
-- für jede Messung des Messtasters (MTA, MTB) jeweils zwei oder mehr Datentelegramme (DTA1, DTB1 ... DTAn, DTBn) mit unterschiedlicher Ordnungszahl (n) ausgesendet werden, von denen jedes
--- eine für den jeweiligen Messtaster (MTA, MTB) charakteristische Statusinformation (STATUS),
--- eine für den jeweiligen Messtaster (MTA, MTB) charakteristische Kennung (MTK), und
--- die Ordnungszahl (n) des jeweiligen Datentelegramms (DTA1, DTB1 ... DTAn, DTBn), mit dem die charakteristische Statusinformation (STATUS) für den jeweiligen Messtaster (MTA, MTB) ausgesendet wird, wobei die Ordnungszahl (n) die Reihenfolge für eine Messung eines Messtasters (MTA, MTB) ausgesendeten zwei oder mehr Datentelegramme (DTA1, DTB1 ... DTAn, DTBn) angibt,
umfasst, wobei
-- zwischen dem Beginn zweier Datentelegramme (DTA1, DTB1 ... DTAn, DTBn) eines Messtasters (MTA, MTB) mit der gleichen Ordnungszahl (n) eine im Wesentlichen konstante Zykluszeit (Δt_{Zyklus}) verstreicht,
-- zwischen aufeinander folgenden Datentelegrammen (DTA1, DTB1 ... DTAn, DTBn) einer Messung eines Messtasters (MTA, MTB) mit unterschiedlicher Ordnungszahl (n) jeweils eine im Wesentlichen konstante Pausenzeit (Δt_{PauseA}, Δt_{PauseB}) verstreicht, die mindestens eine einfache Übertragungszeit (TÜ) eines einzelnen der Datentelegramme (DTA1, DTB1 ... DTAn, DTBn) beträgt, und wobei
-- die Pausenzeit (Δt_{PauseA}, Δt_{PauseB}) zwischen den Datentelegrammen (DTA1, DTB1 ... DTAn, DTBn) für jeden der jeweiligen Messtaster (MTA, MTB) in Abhängigkeit von
--- einer Anzahl der mit dem Empfangsteil (ET) kommunizierenden Messtaster (MTA, MTB) in dem Bearbeitungszentrum (BAZ), und
--- der Zykluszeit (Δt_{Zyklus}) jedes der Messtaster (MTA, MTB) zwischen zwei ihrer Datentelegramme (DTA1, DTB1 ... DTAn, DTBn) mit der gleichen Ordnungszahl (n),
und
--- der Übertragungszeit (TÜ) für ein einzelnes der Datentelegramme (DTA1, DTB1 ... DTAn, DTBn), unterschiedlich ist, sodass jedes der Datentelegramme (DTA1, DTB1 ... DTAn, DTBn) der wenigstens zwei Messtaster (MTA, MTB) in einem definierten zeitlichen Raster versendet wird, das für jeden der wenigstens zwei Messtaster (MTA, MTB) unterschiedlich und derart festgelegt ist, dass auch bei gleichzeitigem Sendebeginn des Aussendens von Datentelegrammen (DTA1, DTB1 ... DTAn, DTBn) durch die wenigstens zwei Messtaster (MTA, MTB) immer wenigstens eines der zwei oder mehr Datentelegramme (DTA1, DTB1 ... DTAn, DTBn) einer Messung eines jeden der wenigstens zwei Messtaster (MTA, MTB) nicht zeitlich überlappend mit Datentelegrammen (DTA1, DTB1 ... DTAn, DTBn) eines jeden anderen der wenigstens zwei Messtaster (MTA, MTB) ausgesendet wird.

15. Empfangsteil (ET) zur Verwendung in dem Verfahren nach einem der Ansprüche 1 bis 13 und zum Empfangen von in gemeinsam ausgeführten Messungen gewonnenen Messsignalen (MS) wenigstens zweier, jeweils in einer Spindel (SA, SB) eines Bearbeitungszentrums (BAZ) aufzunehmender Messtaster (MTA, MTB), von denen jeder für jede Messung jeweils drei oder mehr Datentelegramme (DTA1, DTB1 ... DTAn, DTBn) mit unterschiedlichen Ordnungszahlen (n) aussendet und von denen jedes
--- eine für den jeweiligen Messtaster (MTA, MTB) charakteristische Statusinformation (STATUS),
--- eine für den jeweiligen Messtaster (MTA, MTB) charakteristische Kennung (MTK), und
--- die Ordnungszahl (n) des jeweiligen Datentelegramms (DTA1, DTB1 ... DTAn, DTBn), mit dem die charakteristische Statusinformation (STATUS) für den jeweiligen Messtaster (MTA, MTB) ausgesendet wird, wobei die Ordnungszahl (n) die Reihenfolge der für eine Messung ausgesendeten drei oder mehr Datentelegramme (DTA1, DTB1 ... DTAn, DTBn) angibt,
umfasst, wobei
-- zwischen dem Beginn zweier Datentelegramme (DTA1, DTB1 ... DTAn, DTBn) eines Messtasters (MTA, MTB) mit der gleichen Ordnungszahl (n) eine im Wesentlichen konstante Zykluszeit (Δt_{Zyklus}) verstreicht,
-- zwischen aufeinander folgenden Datentelegrammen (DTA1, DTB1 ... DTAn, DTBn) eines Messtasters (MTA, MTB) mit unterschiedlicher Ordnungszahl (n) jeweils eine im Wesentlichen konstante Pausenzeit (Δt_{PauseA}, Δt_{PauseB}) verstreicht, die mindestens eine einfache Übertragungszeit (TÜ) eines einzelnen der Datentelegramme (DTA1, DTB1 ... DTAn, DTBn) beträgt, wobei
-- die Pausenzeit (Δt_{PauseA}, Δt_{PauseB}) zwischen den Datentelegrammen (DTA1, DTB1 ... DTAn, DTBn) für jeden der jeweiligen Messtaster (MTA, MTB) in Abhängigkeit von --- einer Anzahl der mit dem Empfangsteil (ET) kommunizierenden Messtaster (MTA, MTB) in dem Bearbeitungszentrum (BAZ), und --- der Zykluszeit (Δt_{Zyklus}) jedes der Messtaster (MTA, MTB) zwischen zwei ihrer Datentelegramme (DTA1, DTB1 ... DTAn, DTBn) mit der gleichen Ordnungszahl (n),
und
--- der Übertragungszeit (ÜZ) für ein einzelnes der Datentelegramme (DTA1, DTB1 ... DTAn, DTBn), unterschiedlich ist, sodass jedes der Datentelegramme (DTA1, DTB1 ... DTAn, DTBn) der wenigstens zwei Messtaster (MTA, MTB) in einem definierten zeitlichen Raster versendet wird, das für jeden der wenigstens zwei Messtaster (MTA, MTB) unterschiedlich und derart festgelegt ist, dass das Empfangsteil (ET) auch bei gleichzeitigem Sendebeginn des Aussendens von Datentelegrammen (DTA1, DTB1 ... DTAn, DTBn) durch die wenigstens zwei Messtaster (MTA, MTB) immer wenigstens eines der drei oder mehr Datentelegramme (DTA1, DTB1 ... DTAn, DTBn) einer Messung eines jeden der wenigstens zwei Messtaster (MTA, MTB) nicht zeitlich überlappend mit Datentelegrammen (DTA1, DTB1 ... DTAn, DTBn) eines jeden anderen der wenigstens zwei Messtaster (MTA, MTB) über einen gemeinsamen Übertragungskanal (ÜK) empfängt, und wobei
das Empfangsteil (ET) dazu eingerichtet ist, zu ermitteln, ob von einem Messtaster ein erstes, ein zweites, oder ein drittes Datentelegramm (DTA1, DTB1 ... DTAn, DTBn) empfangen wurde, und dazu eingerichtet ist entsprechende Verzögerungszeiten vor dem Weitersenden der charakteristischen Statusinformation aus dem Datentelegramm (DTA1, DTB1 ... DTAn, DTBn) einzuhalten, um die Zeit zwischen einer Antastung am Werkstück und Ausgabe des Schaltsignals durch das Empfangsteil (ET) stets zumindest annähernd konstant zu halten.

## Claims

1. A method for transmitting measurement signals (MS) which are obtained in common measurements with at least two measuring probes (MTA, MTB), each of which is to be accommodated in one spindle (SA, SB) of a machining centre (BAZ), comprising the step
- sending of data telegrams (DTA1, DTB1, ..., DTAn, DTBn) by the respective measuring probe (MTA, MTB) via a common transmission channel (UK) to be received by a reveive part (ET), wherein
-- for each measurement of a measuring probe (MTA, MTB) two or more data telegrams (DTA1, DTB1, ..., DTAn, DTBn) each with a different ordinal number (n) are sent, each of which comprising
--- status information (STATUS) which are characteristic for the respective measuring probe (MTA, MTB),
--- an identification (MTK) which is characteristic for the respective measuring probe (MTA, MTB), and
--- the ordinal number (n) of the respective data telegram (DTA1, DTB1, ..., DTAn, DTBn) with which the characteristic status information (STATUS) for the respective measuring probe (MTA, MTB) are sent, wherein the ordinal number (n) indicates the order of the two or more data telegrams (DTA1, DTB1, ..., DTAn, DTBn) sent for one measurement of a measuring probe (MTA, MTB), wherein
-- an essentially constant cycle time (·t_{Zyklus}) elapses between the commencement of two data telegrams (DTA1, DTB1, ..., DTAn, DTBn) with the same ordinal number (n) of a measuring probe (MTA, MTB),
-- between consecutive data telegrams (DTA1, DTB1, ..., DTAn, DTBn) with different ordinal numbers (n) of a measurement of a measuring probe (MTA, MTB), an essentially constant pause time (·t_{PauseA}, ·t_{PauseA}) elapses which amounts to at least the simple transmission time (TÜ) of a single one of the data telegrams (DTA1, DTB1, ..., DTAn, DTBn), and wherein
-- the pause time (·t_{PauseA}, ·t_{PauseA}) between the data telegrams (DTA1, DTB1, ..., DTAn, DTBn) for each of the respective measuring probes (MTA, MTB) varies dependent on
--- a number of the measuring probes (MTA, MTB) in the machining centre (BAZ), which communicate with the receive part (ET), and
--- the cycle time (·t_{Zyklus}) of each measuring probe (MTA, MTB) between two data telegrams (DTA1, DTB1, ..., DTAn, DTBn) with the same ordinal number (n), and
--- the transmission time (TÜ) of a single one of the data telegrams (DTA1, DTB1, ..., DTAn, DTBn), is different so that each of the data telegrams (DTA1, DTB1, ..., DTAn, DTBn) of the at least two measuring probes (MTA, MTB) is sent within a defined time grid which is different for each of the at least two measuring probes (MTA, MTB), and defined such that also with a simultaneous sending commencement of data telegrams (DTA1, DTB1, ..., DTAn, DTBn) by the at least two measuring probes (MTA, MTB), there is always at least one of the two or more data telegrams (DTA1, DTB1, ..., DTAn, DTBn) of a measurement of each of the at least two measuring probes (MTA, MTB) sent which does not overlap in time with data telegrams (DTA1, DTB1, ..., DTAn, DTBn) of one of each other of the at least two measuring probes (MTA, MTB).

2. The method according to Claim 1, wherein
-- the two or more data telegrams (DTA1, DTB1, ..., DTAn, DTBn) each are sent for one measurement of one of the measuring probes (MTA, MTB), and
-- the characteristic status information to be sent in the data telegrams (DTA1, DTB1, ..., DTAn, DTBn) by the respective measuring probe change depending on the presence of one of two operating modes "normal operation" and "trigger operation" for the respective measuring probe (MTA, MTB), and/or with the further steps
- sending an activating signal (AWA, AWB) to the respective measuring probe (MTA, MTB) in order to initiate sending of the data telegrams (DTA1, DTB1, ..., DTAn, DTBn);
- evaluating the data telegrams (DTA1, DTB1, ..., DTAn, DTBn) after their reception by the receive part (ET), and
- outputting an output signal (AS) which is characteristic for the respective measurement signal (MS) by the receive part (ET) to a numerical control (CNC) of the machining centre (BAZ).

3. The method according to one of Claims 1 to 2, wherein
- the activation of each of the measuring probes (MTA, MTB) is effected by means of a dedicated activating signal (AWA, AWB) for the respective measuring probes (MTA, MTB), or
- the activation of the measuring probes (MTA, MTB) is effected by means of a common activating signal (AWA, AWB) for all measuring probes (MTA, MTB), and/or
- the or each of the activating signals (AWA, AWB) is/are sent
-- from the receive part (ET) and/or
-- from the numerical control (CNC) of the machining centre (BAZ) to the measuring probes (MTA, MTB).

4. The method according to one of the previous claims, wherein the status information (STATUS) which are characteristic for the respective measurement signal (MS) comprise the conditions
- "measuring probe in rest position",
- "measuring probe deflected" and/or the conditions
- "battery of measuring probe ok",
- "battery of measuring probe exhausted" and/or the conditions
- "switching point 1",
- "switching point 2", ...
- "switching point n".

5. The method according to the previous claims, wherein
the measuring probes (MTA, MTB) after activation send the data telegrams (DTA1, DTB1, ..., DTAn, DTBn) in predetermined time intervals to the receive part (ET), and wherein the receive part (ET) monitors whether there is a continuous communication with the measuring probes (MTA, MTB), and/or whether
the condition "battery of measuring probe ok" has changed to the condition "battery of measuring probe exhausted" for one of the measuring probes (MTA, MTB) in order to then output a characteristic warning signal.

6. The method according to one of the previous claims, wherein
the cycle time (·t_{Zyklus}) between two data telegrams (DTA1, DTB1, ..., DTAn, DTBn) of one measuring probe (MTA, MTB) with the same ordinal number (n) for all measuring probes (MTA, MTB) is at least approximately identical, and/or wherein the transmission time of the data telegrams (DTA1, DTB1, ..., DTAn, DTBn) for all data telegrams (DTA1, DTB1, ..., DTAn, DTBn) of all measuring probes (MTA, MTB) is at least approximately identical, and/or wherein
the pause time (·t_{PauseA}, ·t_{PauseA}) between the data telegrams (DTA1, DTB1, ..., DTAn, DTBn) of a respective measurement for each of the respective measuring probe (MTA, MTB) varies depending on
--- a number of the measuring probes (MTA, MTB) in the machining centre (BAZ), which are communicating with the receive part (ET), and
--- a transmission time for a single one of the data telegrams (DTA1, DTB1, ..., DTAn, DTBn), and/or wherein
the pause time to elapse between the data telegrams (DTA1, DTB1, ..., DTAn, DTBn) of the one measuring probe (MTA, MTB) amounts to at least the simple transmission time of a single one of the data telegrams (DTA1, DTB1, ..., DTAn, DTBn), and/or wherein
the pause time to elapse between the data telegrams (DTA1, DTB1, ..., DTAn, DTBn) of the other one of measuring probe (MTA, MTB) amounts to at most twice the transmission time of a single one of the data telegrams (DTA1, DTB1, ..., DTAn, DTBn), and/or wherein
the cycle times of all measuring probes (MTA, MTB) and the pause times between the data telegrams (DTA1, DTB1, ..., DTAn, DTBn) of the measuring probes (MTA, MTB) are defined dependent on the number of spindles in the machining centre and the number of data telegrams (DTA1, DTB1, ..., DTAn, DTBn) which are sent by one measuring probe (MTA, MTB) for a measurement to the receive part, and/or wherein
the cycle times of all measuring probes (MTA, MTB) and the pause times between the data telegrams (DTA1, DTB1, ..., DTAn, DTBn) of each of the measuring probes (MTA, MTB) are defined such that the sum of the transmission times of all first data telegrams (DTA1, DTB1, ..., DTAn, DTBn) of the respective other measuring probes (MTA, MTB) is smaller than or equal to the pause time between the data telegrams (DTA1, DTB1, ..., DTAn, DTBn) of the respective measuring probe (MTA, MTB).

7. The method according to the previous claim, wherein
the cycle times of all measuring probes (MTA, MTB) are set differently so that the data telegrams (DTA1, DTB1, ..., DTAn, DTBn) of all measuring probes (MTA, MTB) are temporally nested within each other in such a manner that at least one of the data telegrams (DTA1, DTB1, ..., DTAn, DTBn) of each of the measuring probes (MTA, MTB) does not overlap in time with other data telegrams (DTA1, DTB1, ..., DTAn, DTBn) of the other measuring probes (MTA, MTB), and/or wherein
each of the measuring probes (MTA, MTB) at the beginning of sending of each of the data telegrams (DTA1, DTB1, ..., DTAn, DTBn) does not send for a safety phase which amounts to approx.. 1 to 3% of the transmission time of a data telegram (DTA1, DTB1, ..., DTAn, DTBn).

8. The method according to one of the previous claims, wherein
in a teach-in phase of all measuring probes (MTA, MTB), (I) the characteristic identification of each measuring probe (MTA, MTB) is established, and/or (II) the cycle times of all measuring probes (MTA, MTB) are input into each of the measuring probes (MTA, MTB), and/or (III) the pause times for consecutive data telegrams (DTA1, DTB1, ..., DTAn, DTBn) of all measuring probes (MTA, MTB) are input into each of the measuring probes (MTA, MTB), and/or wherein in the receive part (ET) and/or in the measuring probes (MTA, MTB) tables with relevant cycle times and pause times are stored for possible variants of (I) measuring probes (MTA, MTB) which are employed in the machining centre with the respective receive part (ET), and (II) the number of data telegrams (DTA1, DTB1, ..., DTAn, DTBn) per measurement, and/ or wherein
how much time has elapsed from detecting the measurement signal for evaluating the data telegrams on the side of the receive part (ET) on the basis of the ordinal number of data telegram which is received undisturbed, the cycle times and the pause times of each measuring probe (MTA, MTB), and/or wherein data telegrams (DTA1, DTB1, ..., DTAn, DTBn) are compiled in the operating mode "trigger operation" for each measurement with a condition transition of the measuring probe (MTA, MTB), which include the condition transition of the measuring probe, a characteristic number or address of the measuring probe (MTA, MTB) and an ordinal number of the respective data telegram (DTA1, DTB1, ..., DTAn, DTBn) with which the characteristic information for the respective measuring probe (MTA, MTB) is sent.

9. The method according to one of the previous claims, wherein
each measuring probe (MTA, MTB) sends the data telegrams (DTA1, DTB1, ..., DTAn, DTBn) in triplicate, wherein the ordinal number of the respective data telegram (DTA1, DTB1, ..., DTAn, DTBn) is increased each time by one and each of the data telegrams (DTA1, DTB1, ..., DTAn, DTBn) is sent in a defined time grid which is different for each measuring probe (MTA, MTB), wherein the chronological sequence of the data telegrams (DTA1, DTB1, ..., DTAn, DTBn) of each single measuring probe (MTA, MTB) and the pauses between them as well as the chronological sequence of the data telegrams (DTA1, DTB1, ..., DTAn, DTBn) of all measuring probes (MTA, MTB) is configured in such a manner that within a defined period of time at least one data telegram of each measuring probe (MTA, MTB) is transmitted to the receive part (ET) without disturbance caused by data telegrams (DTA1, DTB1, ..., DTAn, DTBn) of other measuring probes (MTA, MTB).

10. The method according to the previous claims, wherein
three data telegrams (DTA1, DTB1, ..., DTAn, DTBn) and pauses between them per measuring probe are sent in a chronological sequence of eleven time slots, wherein each of the time slots has a duration which corresponds to the transmission time for a single one of the data telegrams plus a processing time for processing the data telegram on the side of the receive part (ET) and/or the measuring probe.

11. The method according to the previous claim, wherein
in an arrangement of two measuring probes which are communicating with the receive part (ET)
- the one measuring probe in the 1st, 3rd and 9th time slot, and
- the other measuring probe in the 1st, 5th and 9th time slot are sending, or
- the one measuring probe in the 1st, 3rd and 5th time slot, and
- the other measuring probe in the 1st, 5th and 11th time slot are sending, and
wherein the chronological sequence of eleven time slots for each of the measuring probes begins with sending its respective first data telegram (DTA1, DTB1, ..., DTAn, DTBn).

12. The method according to one of the previous claims, wherein
it is evaluated by the receive part (ET) after an undisturbed reception of a data telegram (DTA1, DTB1, ..., DTAn, DTBn) of a measuring probe (MTA, MTB) in the receive part (ET) whether the first, the second, or the third data telegram (DTA1, DTB1, ..., DTAn, DTBn) was received from a measuring probe and corresponding delay times are met before forwarding the characteristic information from the data telegram (DTA1, DTB1, ..., DTAn, DTBn) in order to keep the time at least always approximately constant between touching the workpiece and outputting the switching signal by the receive part (ET).

13. The method according to one of the previous claims, wherein
the respective measuring probe (MTA, MTB) and the receive part (ET) communicate with one another via a wired, a free radio link-bound or a free light path-bound common transmission channel (ÜK).

14. A measuring probe (MTA, MTB) for use in the method according to one of Claims 1 to 13 and for transmitting measurement signals (MS) which are obtained in common measurements, with at least a further measuring probe (MTA, MTB), wherein the measuring probe (MTA, MTB) is adapted to be accommodated in a spindle (SA, SB) of a machining centre (BAZ), which accommodates at least a further measuring probe (MTA, MTB), and wherein each measuring probe (MTA, MTB) has a housing in which a support bearing is formed which defines an X, Y bearing plane and a central axis Z of the measuring probe normal thereto, wherein a measuring probe pin holder is arranged at a carrier body for accommodating a measuring probe pin and a transmission link is slidably guided within the housing along the central axis Z for converting deflections of the carrier body from its rest position into linear movements, and wherein a sensor converts the movements of the transmission link into measuring signals which are processed in a signal processing unit (SAE) at the measuring probe side to be sent to as receive part (ET) of the machining centre (BAZ), wherein the signal processing unit (SAE) is adapted and programmed to
- send data telegrams (DTA1, DTB1, ..., DTAn, DTBn) via a transmission channel (UK) to be received by the receive part (ET), wherein
-- two or more data telegrams (DTA1, DTB1, ..., DTAn, DTBn) with different ordinal numbers (n) each are sent for each measurement of the measuring probe (MTA, MTB), each of which
--- comprising characteristic status information (STATUS) for the respective measuring probe (MTA, MTB),
--- a characteristic identification (MTK) for the respective measuring probe (MTA, MTB), and
--- the ordinal number (n) of the respective data telegram (DTA1, DTB1, ..., DTAn, DTBn) with which the characteristic status information (STATUS) for the respective measuring probe (MTA, MTB) is sent, wherein the ordinal number (n) indicates the order of the two or more data telegrams (DTA1, DTB1, ..., DTAn, DTBn) sent for one measurement of a measuring probe (MTA, MTB), wherein
-- an essentially constant cycle time (·t_{Zyklus}) elapses between the commencement of two data telegrams (DTA1, DTB1, ..., DTAn, DTBn) with the same ordinal number (n) of a measuring probe (MTA, MTB),
-- between consecutive data telegrams (DTA1, DTB1, ..., DTAn, DTBn) with different ordinal numbers (n) of a measurement of a measuring probe (MTA, MTB), an essentially constant pause time (·t_{PauseA}, ·t_{PauseA}) elapses which amounts to at least the simple transmission time (TÜ) of a single one of the data telegrams (DTA1, DTB1, ..., DTAn, DTBn), and wherein
-- the pause time (·t_{PauseA}, ·t_{PauseA}) between the data telegrams (DTA1, DTB1, ..., DTAn, DTBn) for each of the respective measuring probes (MTA, MTB) varies dependent on
--- a number of the measuring probes (MTA, MTB) in the machining centre (BAZ), which communicate with the receive part (ET), and
--- the cycle time (·t_{Zyklus}) of each measuring probe (MTA, MTB) between two data telegrams (DTA1, DTB1, ..., DTAn, DTBn) with the same ordinal number (n), and
--- the transmission time (TÜ) of a single one of the data telegrams (DTA1, DTB1, ..., DTAn, DTBn), so that each of the data telegrams (DTA1, DTB1, ..., DTAn, DTBn) of the at least two measuring probes (MTA, MTB) is sent within a defined time grid which is different for each of the at least two measuring probes (MTA, MTB), and set such that also with a simultaneous sending commencement of data telegrams (DTA1, DTB1, ..., DTAn, DTBn) by the at least two measuring probes (MTA, MTB), there is always at least one of the two or more data telegrams (DTA1, DTB1, ..., DTAn, DTBn) of a measurement of each of the at least two measuring probes (MTA, MTB) sent which does not overlap in time with data telegrams (DTA1, DTB1, ..., DTAn, DTBn) of one of each other of the at least two measuring probes (MTA, MTB).

15. A receive part (ET) for use in the method according to one of Claims 1 to 13 and for receiving measurement signals (MS) which are obtained in common measurements with at least two measuring probes (MTA, MTB), each of which is to be accommodated in one spindle (SA, SB) of a machining centre (BAZ), each of which sending three or more data telegrams (DTA1, DTB1, ..., DTAn, DTBn) with different ordinal numbers (n) for each measurement, and each of which comprising
--- status information (STATUS) which are characteristic for the respective measuring probe (MTA, MTB),
--- an identification (MTK) which is characteristic for the respective measuring probe (MTA, MTB), and
--- the ordinal number (n) of the respective data telegram (DTA1, DTB1, ..., DTAn, DTBn) with which the characteristic status information (STATUS) for the respective measuring probe (MTA, MTB) are sent, wherein the ordinal number (n) indicates the order of the three or more data telegrams (DTA1, DTB1, ..., DTAn, DTBn) sent for one measurement, wherein
-- an essentially constant cycle time (·t_{Zyklus}) elapses between the commencement of two data telegrams (DTA1, DTB1, ..., DTAn, DTBn) of a measuring probe (MTA, MTB)with the same ordinal number (n),
-- between consecutive data telegrams (DTA1, DTB1, ..., DTAn, DTBn) of a measurement of a measuring probe (MTA, MTB) with different ordinal numbers (n), an essentially constant pause time (·t_{PauseA}, ·t_{PauseA}) elapses which amounts to at least the simple transmission time (TÜ) of a single one of the data telegrams (DTA1, DTB1, ..., DTAn, DTBn), wherein
-- the pause time (·t_{PauseA}, ·t_{PauseA}) between the data telegrams (DTA1, DTB1, ..., DTAn, DTBn) for each of the respective measuring probes (MTA, MTB) varies dependent on
--- a number of the measuring probes (MTA, MTB) in the machining centre (BAZ), which communicate with the receive part (ET), and
--- the cycle time (·t_{Zyklus}) of each measuring probe (MTA, MTB) between two data telegrams (DTA1, DTB1, ..., DTAn, DTBn) with the same ordinal number (n), and
--- the transmission time (UZ) of a single one of the data telegrams (DTA1, DTB1, ..., DTAn, DTBn), is different so that each of the data telegrams (DTA1, DTB1, ..., DTAn, DTBn) of the at least two measuring probes (MTA, MTB) is sent within a defined time grid which is different for each of the at least two measuring probes (MTA, MTB), and defined such that also with a simultaneous sending commencement of the three or more data telegrams (DTA1, DTB1, ..., DTAn, DTBn) by the at least two measuring probes (MTA, MTB), there is always at least one of the three or more data telegrams (DTA1, DTB1, ..., DTAn, DTBn) of a measurement of each of the at least two measuring probes (MTA, MTB) sent which does not overlap in time with data telegrams (DTA1, DTB1, ..., DTAn, DTBn) of one of each other of the at least two measuring probes (MTA, MTB) via a common transmission channel (ÜK), and wherein
the receive part (ET) is adapted to determine whether a first, a second, or a third data telegram (DTA1, DTB1, ..., DTAn, DTBn) was received from a measuring probe, and is adapted to meet corresponding delay times before forwarding the characteristic status information from the data telegram (DTA1, DTB1, ..., DTAn, DTBn) in order to keep the time at least always approximately constant between touching the workpiece and outputting the switching signal by the receive part (ET).

## Revendications

1. Procédé de transmission de signaux de mesure (MS) obtenus lors de mesures effectuées en commun d'au moins deux palpeurs de mesure (MTA, MTB) à loger respectivement dans une broche (SA, SB) d'un centre d'usinage (BAZ), comprenant l'étape suivante :
- envoi de télégrammes de données (DTA1, DTB1 ... DTAn, DTBn) par le palpeur de mesure respectif (MTA, MTB) via un canal de transmission commun (ÜK) pour réception par une partie réceptrice (ET), dans lequel
-- pour chaque mesure d'un palpeur de mesure (MTA, MTB), deux ou plus télégrammes de données (DTA1, DTB1 ... DTAn, DTBn) de numéro d'ordre (n) différent sont envoyés, dont chacun comprend
--- une information d'état (STATUS) caractéristique du palpeur de mesure respectif (MTA, MTB),
--- un identifiant (MTK) caractéristique du palpeur de mesure respectif (MTA, MTB) et
--- le numéro d'ordre (n) du télégramme de données respectif (DTA1, DTB1 ... DTAn, DTBn), avec lequel l'information d'état (STATUS) caractéristique du palpeur de mesure respectif (MTA, MTB) est envoyée, le numéro d'ordre (n) indiquant l'ordre des deux ou plus télégrammes de données (DTA1, DTB1 ... DTAn, DTBn) envoyés pour une mesure d'un palpeur de mesure (MTA, MTB), dans lequel
-- un temps de cycle (Δt_{Zyklus}) sensiblement constant s'écoule entre le début de deux télégrammes de données (DTA1, DTB1 ... DTAn, DTBn) d'un palpeur de mesure (MTA, MTB) de même numéro d'ordre (n),
-- un temps de pause (Δt_{PauseA}, Δt_{PauseB}) sensiblement constant s'écoule entre des télégrammes de données (DTA1, DTB1 ... DTAn, DTBn) successifs d'une mesure d'un palpeur de mesure (MTA, MTB) de numéro d'ordre (n) différent, qui est au moins égal à un temps de transmission simple (TÜ) d'un seul des télégrammes de données (DTA1, DTB1 ... DTAn, DTBn), et dans lequel
-- le temps de pause (Δt_{PauseA}, Δt_{PauseB}) entre les télégrammes de données (DTA1, DTB1 ... DTAn, DTBn) est différent pour chacun des palpeurs de mesure respectifs (MTA, MTB)
--- en fonction d'un nombre de palpeurs de mesure (MTA, MTB) communiquant avec la partie réceptrice (ET) dans le centre d'usinage (BAZ), et
--- en fonction du temps de cycle (Δt_{Zyklus}) de chacun des palpeurs de mesure (MTA, MTB) entre deux de leurs télégrammes de données (DTA1, DTB1 ... DTAn, DTBn) de même numéro d'ordre (n), et
--- en fonction du temps de transmission (TÜ) pour un seul des télégrammes de données (DTA1, DTB1 ... DTAn, DTBn),
de sorte que chacun des télégrammes de données (DTA1, DTB1 ... DTAn, DTBn) desdits au moins deux palpeurs de mesure (MTA, MTB) est envoyé dans une trame temporelle définie qui est différente pour chacun desdits au moins deux palpeurs de mesure (MTA, MTB) et définie de telle sorte que, même en cas de début d'émission simultané de l'envoi de télégrammes de données (DTA1, DTB1 ... DTAn, DTBn) par lesdits au moins deux palpeurs de mesure (MTA, MTB), toujours au moins un des deux ou plus télégrammes de données (DTA1, DTB1 ... DTAn, DTBn) d'une mesure de chacun desdits au moins deux palpeurs de mesure (MTA, MTB) n'est pas envoyé en chevauchement dans le temps avec des télégrammes de données (DTA1, DTB1 ... DTAn, DTBn) de chaque autre desdits au moins deux palpeurs de mesure (MTA, MTB).

2. Procédé selon la revendication 1, dans lequel
-- les deux ou plus télégrammes de données (DTA1, DTB1 ... DTAn, DTBn) sont envoyés chaque fois pour une mesure d'un des palpeurs de mesure (MTA, MTB), et
-- l'information d'état caractéristique à envoyer par le palpeur de mesure respectif dans les télégrammes de données (DTA1, DTB1 ... DTAn, DTBn) change en fonction de la présence d'un des deux états de fonctionnement « mode normal » et « mode déclenchement » pour le palpeur de mesure respectif (MTA, MTB), et/ou comprenant les étapes supplémentaires suivantes :
- envoi d'un signal d'activation (AWA, AWB) aux palpeurs de mesure respectifs (MTA, MTB) pour initier leur envoi des télégrammes de données (DTA1, DTB1 ... DTAn, DTBn) ;
- évaluation des télégrammes de données (DTA1, DTB1 ... DTAn, DTBn) après leur réception par la partie réceptrice (ET) et
- fourniture d'un signal de sortie (AS) caractéristique du signal de mesure respectif (MS) par la partie réceptrice (ET) à une commande numérique (CNC) du centre d'usinage (BAZ).

3. Procédé selon l'une des revendications 1 à 2, dans lequel
- l'activation de chacun des palpeurs de mesure (MTA, MTB) s'effectue au moyen d'un signal d'activation (AWA, AWB) dédié au palpeur de mesure respectif (MTA, MTB), ou
- l'activation des palpeurs de mesure (MTA, MTB) s'effectue au moyen d'un signal d'activation (AWA, AWB) commun à tous les palpeurs de mesure (MTA, MTB), et/ou
- le ou chaque signal d'activation (AWA, AWB) est envoyé aux palpeurs de mesure (MTA, MTB)
-- par la partie réceptrice (ET) et/ou
-- par la commande numérique (CNC) du centre d'usinage (BAZ).

4. Procédé selon l'une des revendications précédentes, dans lequel
l'information d'état (STATUS) caractéristique du signal de mesure (MS) respectif comprend les états
- « palpeur de mesure en position de repos »,
- « palpeur de mesure dévié », et/ou les états
- « batterie du palpeur de mesure est bonne »,
- « batterie du palpeur de mesure est vide », et/ou les états
- « point de commutation 1 »,
- « point de commutation 2 » ...
- « point de commutation n ».

5. Procédé selon la revendication précédente, dans lequel,
les palpeurs de mesure (MTA, MTB) envoient, après leur activation, leurs télégrammes de données (DTA1, DTB1 ... DTAn, DTBn) à la partie réceptrice (ET) à des intervalles de temps prédéterminés, et dans lequel la partie réceptrice (ET) surveille si une communication avec les palpeurs de mesure (MTA, MTB) existe en permanence, et/ou si l'état « batterie du palpeur de mesure est bonne » a changé en « batterie du palpeur de mesure est vide » pour un des palpeurs de mesure (MTA, MTB) pour délivrer alors un signal d'avertissement caractéristique de cela.

6. Procédé selon l'une des revendications précédentes, dans lequel
le temps de cycle (Δt_{Zyklus}) entre deux télégrammes de données (DTA1, DTB1 ... DTAn, DTBn) d'un palpeur de mesure (MTA, MTB) de même numéro d'ordre (n) est au moins approximativement identique pour tous les palpeurs de mesure (MTA, MTB), et/ou dans lequel
le temps de transmission des télégrammes de données (DTA1, DTB1 ... DTAn, DTBn) est au moins approximativement identique pour tous les télégrammes de données (DTA1, DTB1 ... DTAn, DTBn) de tous les palpeurs de mesure (MTA, MTB), et/ou dans lequel
le temps de pause (Δt_{PauseA}, Δt_{PauseB}) entre les télégrammes de données (DTA1, DTB1 ... DTAn, DTBn) d'une mesure respective pour chacun des palpeurs de mesure respectifs (MTA, MTB) est différent
--- en fonction d'un nombre de palpeurs de mesure (MTA, MTB) communiquant avec la partie réceptrice (ET) dans le centre d'usinage (BAZ), et
--- en fonction d'un temps de transmission pour un seul des télégrammes de données (DTA1, DTB1 ... DTAn, DTBn), et/ou dans lequel
le temps de pause à écouler entre les télégrammes de données (DTA1, DTB1 ... DTAn, DTBn) de l'un des palpeurs de mesure (MTA, MTB) est au moins égal au temps de transmission simple d'un seul des télégrammes de données (DTA1, DTB1 ... DTAn, DTBn), et/ou
le temps de pause à écouler entre les télégrammes de données (DTA1, DTB1 ... DTAn, DTBn) de l'autre palpeur de mesure (MTA, MTB) est au plus égal au double du temps de transmission d'un seul des télégrammes de données (DTA1, DTB1 ... DTAn, DTBn), et/ou dans lequel
les temps de cycle de tous les palpeurs de mesure (MTA, MTB) et les temps de pause entre les télégrammes de données (DTA1, DTB1 ... DTAn, DTBn) des palpeurs de mesure (MTA, MTB) sont définis en fonction du nombre de broches dans le centre d'usinage et du nombre de télégrammes de données (DTA1, DTB1 ... DTAn, DTBn) envoyés à la partie réceptrice par un palpeur de mesure (MTA, MTB) pour une mesure, et/ou dans lequel
les temps de cycle de tous les palpeurs de mesure (MTA, MTB) et les temps de pause entre les télégrammes de données (DTA1, DTB1 ... DTAn, DTBn) de chacun des palpeurs de mesure (MTA, MTB) sont déterminés de telle sorte que la somme des temps de transmission de tous les premiers télégrammes de données (DTA1, DTB1 ... DTAn, DTBn) des autres palpeurs de mesure respectifs (MTA, MTB) soit inférieure ou égale au temps de pause entre les télégrammes de données (DTA1, DTB1 ... DTAn, DTBn) du palpeur de mesure respectif (MTA, MTB).

7. Procédé selon la revendication précédente, dans lequel
les temps de cycle de tous les palpeurs de mesure (MTA, MTB) sont fixés à des longueurs différentes, de sorte que les télégrammes de données (DTA1, DTB1 ... DTAn, DTBn) de tous les palpeurs de mesure (MTA, MTB) sont imbriqués temporellement de sorte qu'au moins un des télégrammes de données (DTA1, DTB1 ... DTAn, DTBn) de chacun des palpeurs de mesure (MTA, MTB) ne chevauche pas dans le temps d'autres télégrammes de données (DTA1, DTB1 ... DTAn, DTBn) des autres palpeurs de mesure (MTA, MTB), et/ou dans lequel
chacun des palpeurs de mesure (MTA, MTB), au début de l'envoi de chacun des télégrammes de données (DTA1, DTB1 ... DTAn, DTBn), n'émet pas pendant une phase de sécurité qui dure à peu près 1 à 3 % du temps de transmission d'un télégramme de données (DTA1, DTB1 ... DTAn, DTBn).

8. Procédé selon l'une des revendications précédentes, dans lequel
dans une phase d'apprentissage de tous les palpeurs de mesure (MTA, MTB) (i) l'identifiant caractéristique de chacun des palpeurs de mesure (MTA, MTB) est défini, et/ou (ii) dans chacun des palpeurs de mesure (MTA, MTB) (i) sont entrés les temps de cycle de tous les palpeurs de mesure (MTA, MTB), et/ou (iii) dans chacun des palpeurs de mesure (MTA, MTB) sont entrés les temps de pause pour des télégrammes de données successifs (DTA1, DTB1 ... DTAn, DTBn) de tous les palpeurs de mesure (MTA, MTB), et/ou dans lequel
dans la partie réceptrice (ET) et/ou les palpeurs de mesure (MTA, MTB) sont stockés, pour des variantes possibles (i) des palpeurs de mesure (MTA, MTB) utilisés dans le centre d'usinage avec la partie réceptrice (ET) respective, et (ii) du nombre de télégrammes de données (DTA1, DTB1 ... DTAn, DTBn) par mesure, des tableaux avec les temps de cycle et les temps de pause adéquats, et/ou dans lequel
pour évaluer les télégrammes de données du côté de la partie réceptrice (ET), on détermine, à partir du numéro d'ordre d'un télégramme de données reçu sans perturbation, des temps de cycle et des temps de pause de chacun des palpeurs de mesure (MTA, MTB), combien de temps s'est écoulé depuis l'enregistrement du signal de mesure, et/ou dans lequel,
dans le mode de fonctionnement « mode déclenchement », pour chaque mesure avec une transition d'état du palpeur de mesure (MTA, MTB) sont composés des télégrammes de données (DTA1, DTB1 ... DTAn, DTBn) comprenant pour le palpeur de mesure respectif (MTA, MTB) la transition d'état du palpeur de mesure, un numéro ou une adresse du palpeur de mesure (MTA, MTB) caractéristique du palpeur de mesure respectif (MTA, MTB) et un numéro d'ordre du télégramme de données respectif (DTA1, DTB1 ... DTAn, DTBn) avec lequel l'information caractéristique du palpeur de mesure respectif (MTA, MTB) est envoyée.

9. Procédé selon l'une des revendications précédentes, dans lequel
chaque palpeur de mesure (MTA, MTB) envoie en triple les télégrammes de données (DTA1, DTB1 ... DTAn, DTBn), le numéro d'ordre du télégramme de données respectif étant chaque fois augmenté de un et chacun des télégrammes de données (DTA1, DTB1 ... DTAn, DTBn) étant envoyé dans une trame temporelle définie qui est différente pour chaque palpeur de mesure (MTA, MTB), la séquence chronologique des télégrammes de données (DTA1, DTB1 ... DTAn, DTBn) de chaque palpeur de mesure individuel (MTA, MTB) et des pauses entre eux, ainsi que la séquence chronologique des télégrammes de données (DTA1, DTB1 ... DTAn, DTBn) de tous les palpeurs de mesure (MTA, MTB) étant conçues de telle sorte que, dans un intervalle de temps défini, au moins un télégramme de données de chaque palpeur de mesure (MTA, MTB) soit transmis sans perturbation à la partie réceptrice (ET) par des télégrammes de données (DTA1, DTB1 ... DTAn, DTBn) d'autres palpeurs de mesure (MTA, MTB).

10. Procédé selon la revendication précédente, dans lequel
par palpeur de mesure, trois télégrammes de données (DTA1, DTB1 ... DTAn, DTBn) et pauses entre eux sont envoyés dans une séquence chronologique de onze tranches de temps, chacune des tranches de temps ayant une durée qui correspond au temps de transmission d'un seul des télégrammes de données augmenté d'un temps de traitement pour le traitement du télégramme de données du côté de la partie réceptrice (ET) et/ou du palpeur de mesure.

11. Procédé selon la revendication précédente, dans lequel
dans un agencement de deux palpeurs de mesure communiquant avec la partie réceptrice (ET)
- un palpeur de mesure émet dans la 1^{ère}, la 3^{ème} et la 9^{ème} tranche de temps, et
- l'autre palpeur de mesure émet dans la 1^{ère}, la 5^{ème} et la 9^{ème} tranche de temps, ou
- un palpeur de mesure émet dans la 1^{ère}, la 3^{ème} et la 5^{ème} tranche de temps, et
- l'autre palpeur de mesure émet dans la 1^{ère}, la 5^{ème} et la 11^{ème} tranche de temps, et dans lequel la séquence chronologique de onze tranches de temps commence pour chacun des palpeurs de mesure par l'envoi de son premier télégramme de données respectif (DTA1, DTB1 ... DTAn, DTBn).

12. Procédé selon l'une des revendications précédentes, dans lequel
après une réception non perturbée d'un télégramme de données (DTA1, DTB1 ... DTAn, DTBn) d'un palpeur de mesure dans la partie réceptrice (ET), la partie réceptrice (ET) évalue si le premier, le deuxième ou le troisième télégramme de données (DTA1, DTB1 ... DTAn, DTBn) a été reçu d'un palpeur de mesure, et respecte les temps de retard correspondants avant la retransmission de l'information caractéristique issue du télégramme de données (DTA1, DTB1 ... DTAn, DTBn), afin de toujours maintenir au moins approximativement constant le temps entre un palpage sur la pièce et la fourniture du signal de commutation par la partie réceptrice (ET).

13. Procédé selon l'une des revendications précédentes, dans lequel
les palpeurs de mesure respectifs (MTA, MTB) et la partie réceptrice (ET) communiquent entre eux par un canal de transmission commun (ÜK) par voie filaire, voie radioélectrique libre ou voie lumineuse libre.

14. Palpeur de mesure (MTA, MTB) destiné à être utilisé dans le procédé selon l'une des revendications 1 à 13 et à transmettre des signaux de mesure (MS) acquis lors de mesures effectuées en commun avec au moins un autre palpeur de mesure (MTA, MTB), lequel palpeur de mesure (MTA, MTB) est conçu pour être logé dans une broche (SA, SB) d'un centre d'usinage (BAZ) dans lequel ledit au moins un autre palpeur de mesure (MTA, MTB) est logé, chaque palpeur de mesure (MTA, MTB) présentant un boîtier dans lequel est réalisé un palier d'appui qui définit un plan de palier X, Y et un axe central Z normal à celui-ci du palpeur de mesure, un logement de tige de palpage étant disposé sur un corps porteur pour recevoir une tige de palpage et un élément de transmission étant guidé coulissant dans le boîtier le long de l'axe central Z pour convertir en mouvements rectilignes les déviations du corps porteur de sa position de repos, et un capteur convertissant les mouvements de l'élément de transmission en signaux de mesure qui sont mis en forme dans une unité de mise en forme de signaux (SAE) côté palpeur de mesure pour envoi à une partie réceptrice (ET) du centre d'usinage (BAZ), laquelle unité de mise en forme de signaux (SAE) est conçue et programmée pour
- envoyer des télégrammes de données (DTA1, DTB1 ... DTAn, DTBn) via un canal de transmission (ÜK) pour réception par la partie réceptrice (ET), dans lequel
-- pour chaque mesure du palpeur de mesure (MTA, MTB), deux ou plus télégrammes de données (DTA1, DTB1 ... DTAn, DTBn) de numéro d'ordre (n) différent sont envoyés respectivement, dont chacun comprend
--- une information d'état (STATUS) caractéristique du palpeur de mesure respectif (MTA, MTB),
--- un identifiant (MTK) caractéristique du palpeur de mesure respectif (MTA, MTB) et
--- le numéro d'ordre (n) du télégramme de données respectif (DTA1, DTB1 ... DTAn, DTBn), avec lequel l'information d'état (STATUS) caractéristique du palpeur de mesure respectif (MTA, MTB) est envoyée, le numéro d'ordre (n) indiquant l'ordre des deux ou plus télégrammes de données (DTA1, DTB1 ... DTAn, DTBn) envoyés pour une mesure d'un palpeur de mesure (MTA, MTB), dans lequel
-- un temps de cycle (Δt_{Zyklus}) sensiblement constant s'écoule entre le début de deux télégrammes de données (DTA1, DTB1 ... DTAn, DTBn) d'un palpeur de mesure (MTA, MTB) de même numéro d'ordre (n),
-- un temps de pause (Δt_{PauseA}, Δt_{PauseB}) sensiblement constant s'écoule entre des télégrammes de données (DTA1, DTB1 ... DTAn, DTBn) successifs d'une mesure d'un palpeur de mesure (MTA, MTB) de numéro d'ordre (n) différent, qui est au moins égal à un temps de transmission simple (TÜ) d'un seul des télégrammes de données (DTA1, DTB1 ... DTAn, DTBn), et dans lequel
-- le temps de pause (Δt_{PauseA}, Δt_{PauseB}) entre les télégrammes de données (DTA1, DTB1 ... DTAn, DTBn) est différent pour chacun des palpeurs de mesure respectifs (MTA, MTB)
--- en fonction d'un nombre de palpeurs de mesure (MTA, MTB) communiquant avec la partie réceptrice (ET) dans le centre d'usinage (BAZ), et
--- en fonction du temps de cycle (Δt_{Zyklus}) de chacun des palpeurs de mesure (MTA, MTB) entre deux de leurs télégrammes de données (DTA1, DTB1 ... DTAn, DTBn) de même numéro d'ordre (n), et
--- en fonction du temps de transmission (TÜ) pour un seul des télégrammes de données (DTA1, DTB1 ... DTAn, DTBn),
de sorte que chacun des télégrammes de données (DTA1, DTB1 ... DTAn, DTBn) desdits au moins deux palpeurs de mesure (MTA, MTB) est envoyé dans une trame temporelle définie qui est différente pour chacun desdits au moins deux palpeurs de mesure (MTA, MTB) et définie de telle sorte que, même en cas de début d'émission simultané de l'envoi de télégrammes de données (DTA1, DTB1 ... DTAn, DTBn) par lesdits au moins deux palpeurs de mesure (MTA, MTB), toujours au moins un des deux ou plus télégrammes de données (DTA1, DTB1 ... DTAn, DTBn) d'une mesure de chacun desdits au moins deux palpeurs de mesure (MTA, MTB) n'est pas envoyé en chevauchement dans le temps avec des télégrammes de données (DTA1, DTB1 ... DTAn, DTBn) de chaque autre desdits au moins deux palpeurs de mesure (MTA, MTB).

15. Partie réceptrice (ET) destinée à être utilisée dans le procédé selon l'une des revendications 1 à 13 et à recevoir des signaux de mesure (MS) acquis lors de mesures effectuées en commun par au moins deux palpeurs de mesure (MTA, MTB) à loger chacun dans une broche (SA, SB) d'un centre d'usinage (BAZ), dont chacun envoie pour chaque mesure trois ou plus télégrammes de données (DTA1, DTB1 ... DTAn, DTBn) de numéros d'ordre (n) différents et dont chacun comprend
--- une information d'état (STATUS) caractéristique du palpeur de mesure respectif (MTA, MTB),
--- un identifiant (MTK) caractéristique du palpeur de mesure respectif (MTA, MTB) et
--- le numéro d'ordre (n) du télégramme de données respectif (DTA1, DTB1 ... DTAn, DTBn), avec lequel l'information d'état (STATUS) caractéristique du palpeur de mesure respectif (MTA, MTB) est envoyée, le numéro d'ordre (n) indiquant l'ordre des trois ou plus télégrammes de données (DTA1, DTB1 ... DTAn, DTBn) envoyés pour une mesure, dans lequel
-- un temps de cycle (Δt_{Zyklus}) sensiblement constant s'écoule entre le début de deux télégrammes de données (DTA1, DTB1 ... DTAn, DTBn) d'un palpeur de mesure (MTA, MTB) de même numéro d'ordre (n),
-- un temps de pause (Δt_{PauseA}, Δt_{PauseB}) sensiblement constant s'écoule entre des télégrammes de données (DTA1, DTB1 ... DTAn, DTBn) successifs d'un palpeur de mesure (MTA, MTB) de numéro d'ordre (n) différent, qui est au moins égal à un temps de transmission simple (TÜ) d'un seul des télégrammes de données (DTA1, DTB1 ... DTAn, DTBn), dans lequel
-- le temps de pause (Δt_{PauseA}, Δt_{PauseB}) entre les télégrammes de données (DTA1, DTB1 ... DTAn, DTBn) est différent pour chacun des palpeurs de mesure respectifs (MTA, MTB)
--- en fonction d'un nombre de palpeurs de mesure (MTA, MTB) communiquant avec la partie réceptrice (ET) dans le centre d'usinage (BAZ), et
--- en fonction du temps de cycle (Δt_{Zyklus}) de chacun des palpeurs de mesure (MTA, MTB) entre deux de leurs télégrammes de données (DTA1, DTB1 ... DTAn, DTBn) de même numéro d'ordre (n), et
--- en fonction du temps de transmission (ÜZ) pour un seul des télégrammes de données (DTA1, DTB1 ... DTAn, DTBn),
de sorte que chacun des télégrammes de données (DTA1, DTB1 ... DTAn, DTBn) desdits au moins deux palpeurs de mesure (MTA, MTB) est envoyé dans une trame temporelle définie qui est différente pour chacun desdits au moins deux palpeurs de mesure (MTA, MTB) et définie de telle sorte que la partie réceptrice (ET) reçoit, même en cas de début d'émission simultané de l'envoi de télégrammes de données (DTA1, DTB1 ... DTAn, DTBn) par lesdits au moins deux palpeurs de mesure (MTA, MTB), toujours au moins un des trois ou plus télégrammes de données (DTA1, DTB1 ... DTAn, DTBn) d'une mesure de chacun desdits au moins deux palpeurs de mesure (MTA, MTB) sans chevauchement dans le temps avec des télégrammes de données (DTA1, DTB1 ... DTAn, DTBn) de chaque autre desdits au moins deux palpeurs de mesure (MTA, MTB) via un canal de transmission commun (ÜK), et dans lequel
la partie réceptrice (ET) est conçue pour déterminer si un premier, un deuxième ou un troisième télégramme de données (DTA1, DTB1 ... DTAn, DTBn) a été reçu d'un palpeur de mesure, et est conçue pour respecter les temps de retard correspondants avant la retransmission de l'information d'état caractéristique issue du télégramme de données (DTA1, DTB1 ... DTAn, DTBn), afin de toujours maintenir au moins approximativement constant le temps entre un palpage sur la pièce et la fourniture du signal de commutation par la partie réceptrice (ET).
